# EUROPEAN PATENT APPLICATION

(11) **EP 4 827 193 A1**
(43) Date of publication of application: **21.10.2026**
(21) Application number: 23961110.6
(22) Date of filing: 13.12.2023
(51) Int. Cl.: H04W 68/00

(54) **WIRELESS COMMUNICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Mewburn Ellis LLP
(86) International application number: PCT/CN2023/138435
(87) International publication number: WO 2025/123246

(57) **Abstract**

A wireless communication method, apparatus, device, and storage medium, relating to communication technology. The method includes: a terminal device receives first configuration information sent by a network device of a first cell, where the first configuration information includes configuration information related to a paging channel (510); the terminal device monitors a paging channel on a second cell according to the first configuration information (520). The method enables the terminal device to obtain a paging message through the second cell in a case where the first cell does not send the paging channel. That is, through this enhanced paging mechanism, energy consumption of the network device can be saved while ensuring network communication performance.

## Description

### TECHNICAL FIELD

This disclosure relates to the field of communication technologies, and in particular, to a wireless communication method, apparatus, device, and storage medium.

### BACKGROUND

Network energy saving is of great significance for environmental sustainability, reducing environmental impact (reducing greenhouse gas emissions), and saving operating costs.

To achieve network energy saving, one deployment method is to reduce the transmission of downlink common channels or signals in the network on energy-saving cells. Downlink common channels or signals mainly include system information and paging messages. In an energy-saving cell, the network device may not send the system information of the cell. Only when a terminal device has a need to receive system information, for example, when it needs to access the network or re-perform time-frequency synchronization, does it send a request message to the network device requesting the transmission of the system information.

However, this method is not applicable to paging messages because the terminal device cannot determine when it needs to receive a paging message. How to enhance the existing paging mechanism to achieve the purpose of network energy saving is a problem to be solved.

### SUMMARY

The embodiments of the disclosure provide a wireless communication method, apparatus, device, and storage medium. The technical solutions provided by the embodiments of the disclosure are as follows.

According to one aspect of an embodiment of the disclosure, a wireless communication method is provided. The method is executed by a terminal device and includes the following. First configuration information sent by a network device of a first cell is received, the first configuration information includes configuration information related to a paging channel. A paging channel on a second cell is monitored according to the first configuration information.

According to one aspect of an embodiment of the disclosure, a wireless communication method is provided. The method is executed by a network device of a first cell and includes the following. First configuration information is sent to a terminal device, the first configuration information includes configuration information related to a paging channel, the first configuration information is used for the terminal device to monitor a paging channel on a second cell.

According to one aspect of an embodiment of the disclosure, a wireless communication method is provided. The method is executed by a terminal device and includes the following. First configuration information sent by a network device of a first cell is received, the first configuration information includes configuration information related to a paging channel and first downlink bandwidth part (BWP) configuration information, the first downlink BWP configuration information is used to determine a first downlink BWP. The paging channel on the first downlink BWP is monitored according to the first configuration information.

According to one aspect of an embodiment of the disclosure, a wireless communication method is provided. The method is executed by a network device of a first cell, and includes the following. First configuration information is sent to a terminal device, the first configuration information includes configuration information related to a paging channel and first downlink bandwidth part (BWP) configuration information, the first downlink BWP configuration information is used to determine a first downlink BWP, the first configuration information is used for the terminal device to monitor the paging channel on the first downlink BWP.

According to one aspect of an embodiment of the disclosure, a wireless communication apparatus is provided. The apparatus includes a receiving module, configured to receive first configuration information sent by a network device of a first cell, the first configuration information includes configuration information related to a paging channel. The receiving module is further configured to monitor a paging channel on a second cell according to the first configuration information.

According to one aspect of an embodiment of the disclosure, a wireless communication apparatus is provided. The apparatus includes a sending module, configured to send first configuration information to a terminal device, the first configuration information includes configuration information related to a paging channel, the first configuration information is used for the terminal device to monitor a paging channel on a second cell.

According to one aspect of an embodiment of the disclosure, a wireless communication apparatus is provided. The apparatus includes a receiving module, configured to receive first configuration information sent by a network device of a first cell, the first configuration information includes configuration information related to a paging channel and first downlink bandwidth part (BWP) configuration information, the first downlink BWP configuration information is used to determine a first downlink BWP; the receiving module is further configured to monitor the paging channel on the first downlink BWP according to the first configuration information.

According to one aspect of an embodiment of the disclosure, a wireless communication apparatus is provided. The apparatus includes a sending module, configured to send first configuration information to a terminal device, the first configuration information includes configuration information related to a paging channel and first downlink bandwidth part (BWP) configuration information, the first downlink BWP configuration information is used to determine a first downlink BWP, the first configuration information is used for the terminal device to monitor the paging channel on the first downlink BWP.

According to one aspect of an embodiment of the disclosure, a communication device is provided. The communication device includes a processor and a memory, the memory stores a computer program, the processor executes the computer program to implement the wireless communication method on the terminal device side described above, or to implement the wireless communication method on the network device side described above.

According to one aspect of an embodiment of the disclosure, a computer-readable storage medium is provided. The storage medium stores a computer program, the computer program is used to be executed by a processor to implement the wireless communication method on the terminal device side described above, or to implement the wireless communication method on the network device side described above.

According to one aspect of an embodiment of the disclosure, a chip is provided. The chip includes programmable logic circuits and/or program instructions, when the chip is running, it is used to implement the wireless communication method on the terminal device side described above, or to implement the wireless communication method on the network device side described above.

According to one aspect of an embodiment of the disclosure, a computer program product is provided, the computer program product includes computer instructions, the computer instructions are stored in a computer-readable storage medium, a processor reads and executes the computer instructions from the computer-readable storage medium to implement the wireless communication method on the terminal device side described above, or to implement the wireless communication method on the network device side described above.

The technical solutions provided by the embodiments of the disclosure may include the following beneficial effects: after receiving the first configuration information sent by the network device of the first cell, the terminal device monitors the paging channel on the second cell according to the first configuration information which includes configuration information related to the paging channel. This enables the terminal device to obtain a paging message through the second cell in a case where the first cell does not send the paging channel. That is, through this enhanced paging mechanism, energy consumption of the network device can be saved while ensuring network communication performance.

### BRIEF DESCRIPTION OF THE DRAWINGS

FIG. 1 is a schematic architectural diagram of a communication system provided by an embodiment of the disclosure.
FIG. 2 is a schematic architectural diagram of another communication system provided by an embodiment of the disclosure.
FIG. 3 is a schematic architectural diagram of another communication system provided by an embodiment of the disclosure.
FIG. 4 is a schematic diagram of a method for determining a time domain position of a paging early indication occasion provided by an embodiment of the disclosure.
FIG. 5 is a flowchart of a wireless communication method provided by an embodiment of the disclosure.
FIG. 6 is a schematic diagram of monitoring a paging occasion on a second cell provided by an embodiment of the disclosure.
FIG. 7 is a schematic diagram of monitoring a paging occasion on a second cell provided by another embodiment of the disclosure.
FIG. 8 is a flowchart of a wireless communication method provided by another embodiment of the disclosure.
FIG. 9 is a flowchart of a wireless communication method provided by another embodiment of the disclosure.
FIG. 10 is a schematic diagram of a terminal device monitoring a paging occasion on a first downlink bandwidth part provided by an embodiment of the disclosure.
FIG. 11 is a flowchart of a wireless communication method provided by another embodiment of the disclosure.
FIG. 12 is a block diagram of a wireless communication apparatus provided by an embodiment of the disclosure.
FIG. 13 is a block diagram of a wireless communication apparatus provided by another embodiment of the disclosure.
FIG. 14 is a block diagram of a wireless communication apparatus provided by another embodiment of the disclosure.
FIG. 15 is a block diagram of a wireless communication apparatus provided by another embodiment of the disclosure.
FIG. 16 is a schematic structural diagram of a terminal device provided by an embodiment of the disclosure.
FIG. 17 is a schematic structural diagram of a network device provided by an embodiment of the disclosure.

### DETAILED DESCRIPTION

To make the objectives, technical solutions, and advantages of this disclosure clearer, the embodiments of this disclosure are described below in further detail with reference to the accompanying drawings.

The network architecture and business scenarios described in the embodiments of this disclosure are intended to illustrate the technical solutions of the embodiments of this disclosure more clearly, and do not constitute a limitation on the technical solutions provided in the embodiments of this disclosure. Those of ordinary skill in the art will appreciate that with the evolution of network architecture and the emergence of new business scenarios, the technical solutions provided in the embodiments of this disclosure are also applicable to similar technical problems.

The technical solutions of the embodiments of this disclosure may be applied to various communication systems, for example: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), a wireless fidelity (WiFi), a 5th-generation (5G) system, a beyond 5G (B5G) system, a 6th-generation (6G) system, or other communication systems, etc.

Generally, traditional communication systems support a limited number of connections and are also easy to implement. However, with the development of communication technology, mobile communication systems will support not only traditional communication but also, for example, device to device (D2D) communication, machine to machine (M2M) communication, machine type communication (MTC), vehicle to vehicle (V2V) communication, or vehicle to everything (V2X) communication, etc. The embodiments of this disclosure may also be applied to these communication systems.

The communication system in the embodiments of this disclosure may be applied to a carrier aggregation (CA) scenario, may also be applied to a dual connectivity (DC) scenario, and may also be applied to a standalone (SA) deployment scenario.

The communication system in the embodiments of this disclosure may be applied to unlicensed spectrum, where the unlicensed spectrum may also be considered as shared spectrum; or, the communication system in the embodiments of this disclosure may also be applied to licensed spectrum, where the licensed spectrum may also be considered as non-shared spectrum.

The embodiments of this disclosure may be applied to an NTN system, and may also be applied to a terrestrial networks (TN) system. Among them, NTN generally uses satellite communication to provide communication services to terrestrial users. NTN systems currently include NR-NTN and IoT-NTN systems, and may include other NTN systems in the future.

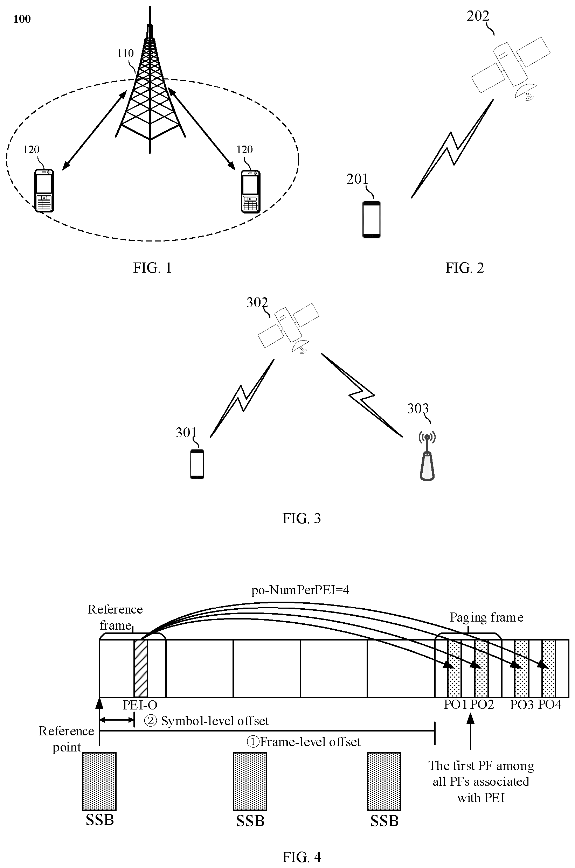

Exemplarily, FIG. 1 is a schematic diagram of an architecture of a communication system provided by an embodiment of this disclosure. As illustrated in FIG. 1, a communication system 100 may include a network device 110, and the network device 110 may be a device that communicates with a terminal device 120. The network device 110 may provide communication coverage for a specific geographical area and may communicate with terminal devices located within the coverage area.

FIG. 1 exemplarily shows one network device 110 and two terminal devices 120. In some embodiments of this disclosure, the communication system 100 may include multiple network devices and the coverage area of each network device may include other numbers of terminal devices, which is not limited in the embodiments of this disclosure.

Exemplarily, FIG. 2 is a schematic architectural diagram of another communication system provided by an embodiment of the disclosure. Referring to FIG. 2, the communication system may include a terminal device 201 and a satellite 202, and wireless communication may be performed between the terminal device 201 and the satellite 202. The network formed between the terminal device 201 and the satellite 202 may also be referred to as NTN. In the architecture of the communication system illustrated in FIG. 2, the satellite 202 may have the function of a base station, and the terminal device 201 and the satellite 202 may communicate directly. Under this system architecture, the satellite 202 may be referred to as a network device. In some embodiments of this disclosure, the communication system may include multiple satellites 202, and the coverage area of each satellite 202 may include other numbers of terminal devices, which is not limited in the embodiments of this disclosure.

Exemplarily, FIG. 3 is a schematic architectural diagram of another communication system provided by an embodiment of the disclosure. Referring to FIG. 3, the communication system includes a terminal device 301, a satellite 302, and a base station 303. Wireless communication may be performed between the terminal device 301 and the satellite 302, and the satellite 302 and the base station 303 may communicate. The network formed between the terminal device 301, the satellite 302, and the base station 303 may also be referred to as NTN. In the architecture of the communication system illustrated in FIG. 3, the satellite 302 may not have the function of a base station, and communication between the terminal device 301 and the base station 303 needs to be relayed by the satellite 302. Under this system architecture, the base station 303 may be referred to as a network device. In some embodiments of this disclosure, the communication system may include multiple base stations 303, each base station 303 may communicate with one or more satellites 302, and the coverage area of each satellite 302 may include other numbers of terminal devices, which is not limited in the embodiments of this disclosure.

In future evolved communication systems such as B5G or 6G, distributed multiple-input multiple-output (distributed MIMO, also referred to as a distributed antenna system) scenarios and/or massive multiple-input multiple-output (massive MIMO, also referred to as a massive antenna matrix system) scenarios may also be included. In some cases, Distributed MIMO and/or Massive MIMO may also support Cell-free or UE-centric deployment scenarios. It should be understood that the above scenarios are also applicable to TN and/or NTN.

The terminal device mentioned in the embodiments of this disclosure may refer to a user equipment (UE), an access terminal, a subscriber unit, a subscriber station, a mobile station, a mobile, a remote station, a remote terminal, a mobile device, a wireless communication device, a user agent, or a user apparatus. Optionally, the terminal device 10 may also be a cellular phone, a cordless phone, a session initiation protocol (SIP) phone, a wireless local loop (WLL) station, a personal digital assistant (PDA), a handheld device with wireless communication capability, a computing device or other processing device connected to a wireless modem, an in-vehicle device, a wearable device, a terminal device in a 5th generation system (5GS) or a terminal device in a future evolved public land mobile network (PLMN), etc., which is not limited in the embodiments of this disclosure. For ease of description, the devices mentioned above are collectively referred to as terminal devices. In the embodiments of this disclosure, "terminal device" and "UE" are generally used interchangeably, but those skilled in the art can understand that they may express the same meaning.

The network device mentioned in the embodiments of this disclosure may be an access network device, may be located on the ground, or may be located on a satellite. An access network device is a device deployed in an access network to provide wireless communication functions for terminal devices. Access network devices may include various forms of macro base stations, micro base stations, relay stations, access points, etc. In systems using different radio access technologies, the name of a device functioning as an access network device may differ. For example, in a 5G NR system, it is called gNodeB or gNB. With the evolution of communication technology, the name "access network device" may change. For ease of description, in the embodiments of this disclosure, the devices providing wireless communication functions for terminal devices as described above are collectively referred to as access network devices. Optionally, a communication relationship can be established between the terminal device and the core network device via the access network device.

The "5G NR system" in the embodiments of this disclosure may also be referred to as a 5G system or an NR system, but those skilled in the art can understand its meaning. The technical solutions described in the embodiments of this disclosure may be applicable to LTE systems, may also be applicable to 5G NR systems, may also be applicable to subsequent evolution systems of 5G NR systems (e.g., B5G systems, 6G systems), and may also be applicable to other communication systems such as narrow band internet of things (NB-IoT) systems, which is not limited in this disclosure.

In the embodiments of this disclosure, a network device may provide service for a cell, and a terminal device communicates with the network device via transmission resources (e.g., frequency domain resources, or spectrum resources) on a carrier used by the cell. The cell may be a cell corresponding to the network device (e.g., a base station). The cell may belong to a macro base station, or may belong to a base station corresponding to a small cell. Here, the small cell may include: a Metro cell, a Micro cell, a Pico cell, a Femto cell, etc. These small cells have characteristics of small coverage area and low transmission power, and are suitable for providing high-rate data transmission services.

Before introducing the technical solutions of this disclosure, the related technologies involved in this disclosure are introduced and explained. The following related technologies, as optional solutions, may be arbitrarily combined with the technical solutions of the embodiments of this disclosure, and all fall within the protection scope of the embodiments of this disclosure. The embodiments of this disclosure include at least part of the following content.

### 1. Network Energy Saving

Network energy saving is of great significance for environmental sustainability, reducing environmental impact (reducing greenhouse gas emissions), and saving operational costs. As 5G gradually becomes popular in various industries and geographical regions, it is necessary to support very high data transmission rates to handle more advanced services and applications (e.g., XR). Network deployment becomes denser, uses more antennas, larger bandwidth, and more frequency bands. Considering the impact of 5G on the environment, controlled and new solutions need to be developed to enhance network energy saving.

Energy consumption has become a key part of operators' operational expenditure (OPEX). According to a report by the global system for mobile communications association relationship (GSMA), the energy cost of mobile networks accounts for approximately 23% of the total operational cost. Most of the energy consumption comes from the radio access network, more specifically, from the active antenna unit (AAU), with data centers and fiber optic transmission accounting for a smaller share. The power consumption of a radio access can be divided into two parts: the dynamic part includes only the power consumption when data is being sent or received; the static part includes the power consumption in all time conditions to maintain the necessary operation of the radio access equipment, including the power consumption when no data is being sent or received.

Therefore, based on the above objectives, it is necessary to research and develop network energy consumption models, key performance indicators (KPIs), evaluation methods, etc., on the network device side to determine and study network energy saving technologies in target deployment scenarios. Among them, the defined power consumption model on the terminal device side can be used as a reference. This research should focus on how to achieve more effective dynamic operation and/or semi-static operation, and consider applying one or more network energy saving technologies in the time domain, frequency domain, spatial domain, and power domain, combined with technologies such as potential terminal device feedback support, potential terminal device assistance information, and information exchange or coordination between network interfaces, to achieve more fine-grained data transmission and/or reception adaptation.

It is worth noting that this research not only evaluates potential network energy saving gains, but also needs to evaluate and balance the impact on network and user performance by observing KPIs such as spectrum efficiency, capacity, user perceived throughput (UPT), latency, terminal device power consumption (UE power consumption), complexity, handover performance, call drop rate, initial access performance, SLA security-related KPIs, etc. This research should avoid having a significant impact on the above KPIs.

### 2. Paging Mechanism in NR System

Paging in the NR system mainly has three application scenarios, corresponding to three types of paging messages, namely, paging initiated by the core network, paging initiated by the gNB, and notification of system information update initiated by the gNB. Among them, the notification of system information update initiated by the gNB is referred to as short messages in the radio resource control (RRC) protocol. The physical downlink control channel (PDCCH) of these three types of paging messages is scrambled with the common paging identifier Paging-radio network temporary identifier (P-RNTI) configured in the cell. A comparison of these three types of paging messages is illustrated in Table 1.

**Table 1**

| Paging type | Paging scope | Related state | Convolution identifier |
|---|---|---|---|
| Core network-initiated paging | Tracking area | RRC_IDLE(RRC idle state) | P-RNTI |
| gNB-initiated paging | Notification area | RRC_INACTIVE (RRC inactive state) | P-RNTI |
| Short message | Cell | RRC_IDLE, RRC_INACTIVE, RRC_CONNECTED (RRC connected) | P-RNTI |

On the primary cell, the terminal device monitors the Type2-physical downlink control channel common search space (Type2-PDCCH CSS) set configured for the paging search space, according to a downlink control information (DCI) format 1_0 with a cyclic redundancy check (CRC) scrambled by a P-RNTI, to receive scheduling of a paging message by the network device. Herein, a short message is RRC information contained in the DCI format 1_0 with the CRC scrambled by the P-RNTI. Specifically, the DCI format 1_0 with the CRC scrambled by the P-RNTI includes two information fields related to the short message, one being a short message indicator field and the other being a short message field. The short message indicator field has 2 bits, used to indicate the information illustrated in Table 2; the short message field has 8 bits, used to indicate the information illustrated in Table 3. Herein, when only scheduling information for the paging message and a tracking reference signal (TRS) availability indication in a case where TRS is configured appear in the DCI, the short message field is reserved.

**Table 2**

| Bit field | Short message indication |
|---|---|
| 00 | Reserved |
| 01 | Only scheduling information for the paging message and TRS availability indication in a case where TRS is configured appear in the DCI |
| 10 | Only short message and a TRS availability indication in a case |
| | where TRS is configured appear in the DCI |
| 11 | Scheduling information for the paging message, short message, and TRS availability indication in a case where TRS is configured appear in the DCI |

**Table 3**

| Bit | Short message |
|---|---|
| 1 | trigger update of other system information blocks than ETWS (earthquake and tsunami warning system)/CMAS (commercial mobile alert service) messages (SIB6, SIB7, SIB8) |
| 2 | Trigger update of ETWS/CMAS messages (SIB6, SIB7, SIB8) |
| 3 | Stop monitoring of paging messages |
| 4 | In a case where a terminal device uses an idle-state eDRX (extended DRX) cycle longer than a BCCH (broadcast control channel) modification period, trigger update of other system information blocks than ETWS/CMAS messages (SIB6, SIB7, SIB8). |
| 5~8 | Reserved |

The basic principle of the paging message transmission mechanism is the same for paging initiated by the core network and paging initiated by the gNB. From the network perspective, the paging message is transmitted on each paging occasion (PO) within a system information modification period. From the terminal device perspective, a UE monitors only one PO per discontinuous reception (DRX) cycle. Each UE calculates the paging frame (PF) and the PO based on its own UE ID (UE identifier) and DRX cycle. That is, each PO is associated only with some specific UEs and is not shared by all UEs. Since a UE only needs to monitor its own PO, this PO-based grouping mechanism can reduce the paging false alarm rate between different POs.

A PO is a set of PDCCH monitoring occasions, consisting of multiple time units (e.g., subframes, slots, or symbols), which can be used for transmitting paging DCI. A PF is a radio frame that may include one or more POs or a starting position of a PO.

In multi-beam operation, the UE assumes that the same paging message and the same short message are repeated across all transmitted beams. Therefore, how to select a beam for receiving the paging message and the short message depends on UE implementation.

The formula for determining the frame number SFN of the radio frame where the PF is located is as follows: $\left(SFN+PF_offset\right) mod T = \left(T div N\right) * \left(UE_ID mod N\right)$

The formula for determining the PO index i_s is as follows: $i_s = floor \left(UE_ID/N\right) mod Ns$

Herein, PF_offset represents the radio frame offset, T is the paging cycle, N is the number of PFs within the paging cycle T, UE_ID is the identifier of the UE, equal to 5G-SAE-temporary mobile station identifier (5G-S-TMSI) mod 1024 or 5G-S-TMSI mod 4096, Ns is the number of POs in one PF. The "mod" symbol is used to obtain the remainder when the number on the left side of "mod" is divided by the number on the right side of "mod", "div" is used to obtain the integer quotient when the number on the left side of "div" is divided by the number on the right side of "div", and "floor" is used to round down the number on the right side of "floor".

If the PDCCH monitoring occasions for paging are defined by the paging search space in system information block (SIB) 1 (i.e., SearchSpaceId configured for the paging search space is not 0), then a PO is a time unit containing a set of PDCCH monitoring occasions, and a PF is a radio frame containing a PO within a DRX cycle.

When the PDCCH monitoring occasions for paging are defined by search space #0 in the master information block (MIB) (i.e., SearchSpaceId configured for the paging search space = 0), a PO is a time unit containing a set of PDCCH monitoring occasions, and a PF is a reference radio frame pointing to the PO. This reference radio frame actually contains synchronization signal/PBCH Block (SSB) transmission occasions. The relationship between this reference radio frame and the radio frame where the associated PO is located (and the slot and orthogonal frequency division multiplexing (OFDM) symbol where it is located) is fixed, so the UE can accurately locate the PO based on the reference radio frame.

The PDCCH monitoring occasions for paging are determined according to the paging search space pagingSearchSpace, the PO start position parameter (optionally configured by the parameter *firstPDCCH-MonitoringOccasionOfPO*), and the number X of PDCCH monitoring occasions corresponding to one SSB (optionally configured by the parameter *nrofPDCCH-MonitoringOccasionPerSSB-InPO*, intended to increase paging occasions for NR-U cells; if not configured, X=1). When SearchSpaceId configured for the paging search space is 0, the PDCCH monitoring occasions for paging are the same as the PDCCH monitoring occasions for remaining minimum system information (RMSI).

When SearchSpaceId configured for the paging search space is 0, Ns is 1 or 2. For Ns=1, there is only one PO starting from the first PDCCH monitoring occasion for paging in the PF. For Ns=2, the PO is in the first half frame (i_s=0) or the second half frame (i_s=1) of the PF.

When SearchSpaceId configured for the paging search space is not 0, the UE monitors the (i_s+1)-th PO. A PO is a set of consecutive "SX" PDCCH monitoring occasions, where S is the number of actually transmitted SSBs in the set of SSB transmission occasions in the cell determined according to SIB1, and X is the number of PDCCH monitoring occasions corresponding to one SSB as described above. In a PO, the [xS+K]-th PDCCH monitoring occasion for paging corresponds to the K-th transmitted SSB, where x=0,1, ..., X-1, K=1, 2, ..., S. For PDCCH monitoring occasions for paging that do not overlap with UL symbols in the PF, they are numbered sequentially starting from zero starting from the first PDCCH monitoring occasion for paging. If the PO start position parameter (*firstPDCCH-MonitoringOccasionOfPO*) is configured, the starting PDCCH monitoring occasion in the (i_s+1)-th PO is the (i_s+1)-th value in this PO start position parameter; otherwise, the starting PDCCH monitoring occasion in the (i_s+1)-th PO is i_sSX. If X > 1, when the UE detects a PDCCH transmission addressed to the P-RNTI within its PO, the UE does not need to monitor subsequent PDCCH monitoring occasions of this PO.

The parameters *Ns*, *nAndPagingFrameOffset*, *nrofPDCCH-MonitoringOccasionPerSSB-InPO*, and the length of the default DRX cycle are notified via SIB1 message. Herein, the values of N and PF_offset are determined by the parameter *nAndPagingFrameOffset*. If the bandwidth part (BWP) used for paging is the initial downlink BWP configured by the parameter *initialDownlinkBWP*, the parameter *firstPDCCH-MonitoringOccasionOfPO* is notified via SIB1 message. If the downlink BWP used for paging is not the initial downlink BWP configured by the parameter *initialDownlinkBWP*, the parameter *firstPDCCH-MonitoringOccasionOfPO* is notified via the configuration message of the corresponding downlink BWP.

If the terminal device does not have a 5G-S-TMSI, for example, when the terminal device has not yet registered with the network, the terminal device should use a default UE_ID = 0 when determining the PF and PO using the above formulas.

### 3. Enhancement of Paging Mechanism in NR System

The power consumption of terminal devices in RRC_IDLE and RRC_INACTIVE states mainly comes from periodic discontinuous reception for paging. To reduce power consumption during paging reception, a power saving signal for paging reception is introduced, called paging early indication (PEI), used to indicate to the terminal device whether it needs to receive paging on its PO before the PO arrives.

PEI further introduces the concept of subgrouping within a PO based on the existing PO grouping. When only UEs of some subgroups are paged, UEs of other subgroups do not need to wake up to receive paging, thereby achieving terminal power saving. Subgroup division supports grouping based on UE ID and grouping assigned by the network. Grouping based on UE ID is similar to the method of calculating PO based on UE ID. For example, the system information broadcasts the maximum number of subgroups per PO, and the grouping information of the UE on this PO can be obtained by performing operations such as modulo the UE ID with this maximum number of subgroups. In the network-assigned grouping scheme, the terminal device directly obtains the grouping information from the network.

On the primary cell, the terminal device monitors the Type2A-PDCCH common search space (Type2A-PDCCH CSS) set configured for the PEI search space (Pei-SearchSpace), according to a DCI format 2_7 with a CRC scrambled by a paging early indication-radio network temporary identifier (PEI-RNTI), to receive a PEI message sent by the network device. The paging indication field in DCI format 2_7 includes NPO * NSG bits, where NPO is the number of POs configured by the higher layer parameter *po-NumPerPEI*, and NSG is the number of subgroups included in one PO configured by the higher layer parameter *subgroupsNumPerPO*. Herein, each bit is used to indicate one terminal subgroup within one PO. The maximum number of subgroups included in one PO is 8.

The function of PEI is to indicate whether terminal devices in RRC_IDLE and RRC_INACTIVE states need to monitor paging. When a terminal group or terminal subgroup needs to monitor paging, the PEI instructs the terminal device to monitor the PO; if no PEI associated with the PO is detected, the terminal does not need to monitor that PO. The network device may provide PEI configuration information via system information.

A UE monitors only one PEI monitoring occasion (PEI-O) per DRX cycle. A PEI-O is a set of multiple PDCCH monitoring occasions. A PEI monitoring occasion is a set of PDCCH monitoring occasions, consisting of multiple time units (e.g., subframes, slots, or symbols), which can be used for transmitting PEI. In multi-beam operation, the UE assumes that the same PEI is repeated across all transmitted beams. Therefore, how to select a beam for receiving the PEI depends on UE implementation.

The time-domain position of the PEI-O associated with the UE's PO is determined based on a reference point and an offset value.

First, a reference frame is determined, and the start of the reference frame is used as the reference point. There is a frame-level offset value between the reference frame and the first PF among all PFs associated with the PEI-O (in a case where one PEI-O is associated with multiple POs, the associated POs may be located in different PFs). This frame-level offset value is configured by the parameter *pei-FrameOffset* in the system information block SIB1.

There is a symbol-level offset value between the reference point and the start position of the first PDCCH monitoring occasion in the PEI-O. This symbol-level offset value is configured by the parameter *firstPDCCH-MonitoringOccasionOfPEI-O* in the system information block.

FIG. 4 provides a schematic diagram of a method for determining the time-domain position of the PEI-O.

The PDCCH monitoring occasions for PEI are determined according to the PEI search space *pei-SearchSpace*, the frame-level offset value, the symbol-level offset value, and the number X of PDCCH monitoring occasions corresponding to one SSB (optionally configured by the parameter *nrofPDCCH-MonitoringOccasionPerSSB-InPO*, intended to increase paging occasions for NR-U cells; if not configured, X=1). When *SearchSpaceId* configured for the PEI search space is 0, the PDCCH monitoring occasions for PEI are the same as the PDCCH monitoring occasions for RMSI. For the case where *SearchSpaceId* > 0 is configured for the PEI search space, the UE determines the first PDCCH monitoring occasion in the PEI-O based on the frame-level offset value and the symbol-level offset value.

When *SearchSpaceId* configured for the PEI search space is 0, the UE monitors the PEI-O based on *searchSpaceZero*. When *SearchSpaceId* configured for the PEI search space is not 0, the UE monitors the PEI-O based on the configured *SearchSpaceId*.

A PEI-O is a set of consecutive "S*X" PDCCH monitoring occasions, where S is the number of actually transmitted SSBs in the set of SSB transmission occasions in the cell determined according to SIB1, and X is the number of PDCCH monitoring occasions corresponding to one SSB as described above. In a PEI-O, the [x*S+K]-th PDCCH monitoring occasion for PEI corresponds to the K-th transmitted SSB, where x=0,1, ..., X-1, K=1, 2, ..., S. For PDCCH monitoring occasions for PEI that do not overlap with UL symbols in the PEI-O, they are numbered sequentially starting from zero starting from the first PDCCH monitoring occasion for PEI. When the UE detects a PEI within its PEI-O, the UE does not need to monitor subsequent PDCCH monitoring occasions of this PEI-O.

If the UE cannot monitor the PEI-O associated with its PO (i.e., all valid PDCCH monitoring occasions for PEI transmission), for example, during cell reselection, then the UE monitors the associated PO.

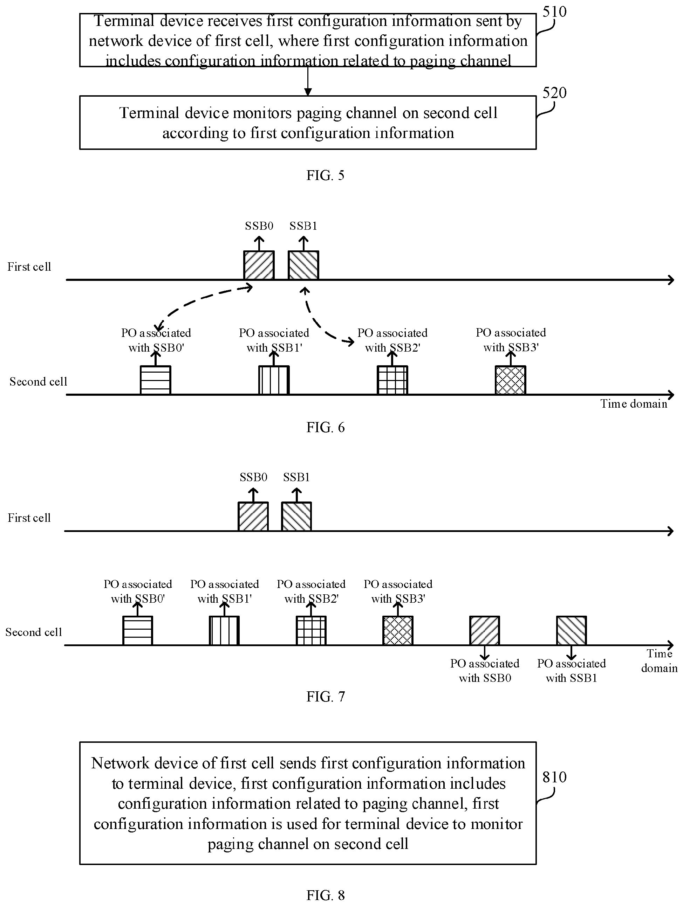

Please refer to FIG. 5, which illustrates a flowchart of a wireless communication method provided by an embodiment of the disclosure. The method is performed by a terminal device. The method may include at least one of steps 510-520.

Step 510: A terminal device receives first configuration information sent by a network device of a first cell, where the first configuration information includes configuration information related to a paging channel.

In some embodiments, the paging channel includes a paging physical downlink control channel (P-PDCCH) and/or a paging early indication physical downlink control channel (PEI-PDCCH).

In some embodiments, the DCI format associated with the P-PDCCH includes DCI format 1_0 whose CRC is scrambled with a P-RNTI.

In some embodiments, the DCI format associated with the PEI-PDCCH includes DCI format 2_7 whose CRC is scrambled with a PEI-RNTI.

It can be understood that, with the development of standard technologies, the paging channel may also include new channels for paging terminal devices, which is not limited in the disclosure.

In some embodiments, the first cell is a primary cell (PCell) of the terminal device.

Step 520: The terminal device monitors a paging channel on a second cell according to the first configuration information.

In some embodiments, the second cell and the first cell are different cells.

In some embodiments, the second cell is a secondary cell (SCell) or a primary secondary cell group cell (PSCell) of the terminal device. Herein, the primary secondary cell is the primary cell in a secondary cell group.

In some embodiments, the first cell is a primary cell, and the second cell is a secondary cell or a primary secondary cell. In this case, through the technical solution provided by the embodiment of the disclosure, the terminal device can monitor the paging channel on the secondary cell, and accordingly, the primary cell can stop sending the relevant paging channel, thereby saving power consumption of the network device of the primary cell.

In some embodiments, the first configuration information includes an identifier of the second cell. The cell identifier is used to distinguish different cells, that is, the terminal device can identify the second cell from multiple cells through the identifier of the second cell.

In some embodiments, the terminal device monitors the P-PDCCH at a PO of the second cell.

In some embodiments, the terminal device monitors the PEI-PDCCH at a PEI-O of the second cell.

In some embodiments, the configuration information related to the paging channel includes configuration information related to a paging channel of the second cell.

In some embodiments, the terminal device monitors the paging channel on the second cell according to the configuration information related to the paging channel of the second cell.

In some embodiments, the configuration information related to the paging channel of the second cell is used to determine at least one of the following information: a search space #0 of the second cell, a length of a paging DRX cycle of the second cell, a cell discontinuous transmission (DTX) cycle configuration of the second cell, a cell DRX cycle configuration of the second cell, an initial downlink BWP configuration of the second cell, a number of SSBs of the second cell, an SSB set of the second cell, a number of PDCCH monitoring occasions corresponding to one SSB of the second cell, and a transmission configuration indicator (TCI) state of the first cell.

In some embodiments, the terminal device can receive scheduling of SIB1 message by the network device of the second cell by monitoring the search space #0 of the second cell. That is, in some embodiments, the search space #0 of the second cell is used for scheduling system messages of the second cell.

In an NR system, to achieve network energy saving, the network device can configure cell DTX and/or cell DRX configurations for the terminal device. During an inactive period of the configured cell DTX, the network device may not send specific downlink channels or signals, and/or the terminal device may not receive specific downlink channels or signals. During an inactive period of the configured cell DRX, the terminal device may not send specific uplink channels or signals, and/or the network device may not receive specific uplink channels or signals. In this way, energy consumption of the network device can be saved.

Within the paging DRX cycle of the second cell, the terminal device can monitor the paging channel on the second cell. In some embodiments, the length of the paging DRX cycle of the second cell is used to determine a PF and a PO.

The cell DTX cycle configuration of the second cell includes an active period and/or an inactive period configuration of the DTX of the second cell, and the cell DRX cycle configuration of the second cell includes an active period and/or an inactive period configuration of the DRX of the second cell. In some embodiments, the cell DTX cycle configuration of the second cell is used to determine the PF and PO, and/or the cell DRX cycle configuration of the second cell is used to determine the PF and PO.

In some embodiments, the BWP used for paging is the initial downlink BWP. Therefore, in some embodiments, the PO and/or the PEI-O can be determined according to the initial downlink BWP configuration of the second cell.

In some embodiments, the number of SSBs of the second cell includes the number of actually transmitted SSBs in the SSB transmission occasion set of the second cell.

In some embodiments, the SSB set of the second cell includes the set of actually transmitted SSBs in the SSB transmission occasion set of the second cell. The SSB set includes multiple SSBs within a certain period. In some embodiments, the PO is a set of consecutive PDCCH monitoring occasions. The number of PDCCH monitoring occasions included in this set of PDCCH monitoring occasions can be obtained by multiplying the number of SSBs of the second cell by the number of PDCCH monitoring occasions corresponding to one SSB of the second cell.

In some embodiments, the PEI-O is a set of consecutive PDCCH monitoring occasions. The number of PDCCH monitoring occasions included in this set of PDCCH monitoring occasions can be obtained by multiplying the number of SSBs of the second cell by the number of PDCCH monitoring occasions corresponding to one SSB of the second cell.

In some embodiments, when the paging channel includes the P-PDCCH, the configuration information related to the paging channel of the second cell is used to determine a paging search space of the second cell. That is, in some embodiments, the terminal device can determine the paging search space in the second cell according to the configuration information related to the paging channel.

In some embodiments, the terminal device can receive a paging message by monitoring the paging search space of the second cell.

In some embodiments, when the configuration information related to the paging channel of the second cell is not used to determine the paging search space of the second cell, the paging search space of the second cell is the search space #0 of the second cell. That is, in some embodiments, the search space #0 of the second cell is used as a default search space for the terminal device to monitor to receive the paging message.

In some embodiments, when the paging channel includes the PEI-PDCCH, the configuration information related to the paging channel of the second cell is used to determine at least one of the following information: a PEI search space of the second cell, a number of POs configured for the second cell, and a number of subgroups included in one PO configured for the second cell. That is, in some embodiments, the terminal device can determine the PEI search space on the second cell according to the configuration information related to the paging channel.

In some embodiments, the terminal device can receive a PEI by monitoring the PEI search space of the second cell. In some embodiments, the number of bits included in the paging indication field in the PEI-PDCCH can be obtained by multiplying the number of POs configured for the second cell by the number of subgroups included in one PO configured for the second cell.

In some embodiments, when the configuration information related to the paging channel of the second cell is not used to determine the PEI search space of the second cell, the PEI search space of the second cell is the search space #0 of the second cell. That is, in some embodiments, the search space #0 of the second cell is used as a default search space for the terminal device to monitor to receive the PEI.

In some embodiments, the TCI state of the first cell is used to determine a beam for a terminal device in the first cell to monitor a paging channel on the second cell.

In some embodiments, the TCI state of the first cell is used to determine an SSB in the second cell that has a quasi-co-location (QCL) relationship with an SSB sent by the first cell.

For example, the SSB set of the second cell includes SSB0, SSB1, SSB2, and SSB3 on the second cell, and the SSB set of the first cell includes SSB0 and SSB1 on the first cell; the TCI state of the first cell is used to determine that SSB0 on the first cell and SSB0 on the second cell have a QCL relationship, and SSB1 on the first cell and SSB2 on the second cell have a QCL relationship. Accordingly, when monitoring the paging channel on the second cell, the terminal device in the first cell can monitor the PO or PEI-O associated with SSB0 and SSB2 on the second cell.

In some embodiments, the TCI state of the first cell is used to determine an association relationship between the SSB set of the first cell and the SSB set of the second cell.

In some embodiments, the TCI state of the first cell is used to determine an SSB in the second cell that the terminal device is to monitor.

For example, the SSB set of the second cell includes SSB0, SSB1, SSB2, and SSB3 on the second cell, and the TCI state of the first cell indicates SSB0 and SSB2 on the second cell. Then, when monitoring the paging channel on the second cell, the terminal device in the first cell can monitor the PO or PEI-O associated with SSB0 and SSB2 on the second cell.

In some embodiments, when the configuration information related to the paging channel of the second cell is not used to determine the TCI state of the first cell, the terminal device in the first cell monitoring the paging channel on the second cell may select a beam based on the implementation of the terminal device. For example, the terminal device may monitor the PO or PEI-O associated with all SSBs on the second cell.

For example, please refer to FIG. 6, which illustrates a schematic diagram of monitoring a paging occasion on a second cell provided by an embodiment of the disclosure. As illustrated in FIG. 6, a terminal device receives first configuration information sent by a network device of a first cell, where the first configuration information includes an identifier of the second cell and configuration information related to a paging channel of the second cell. Herein, the SSB set sent on the first cell is {SSB0, SSB1}, and the SSB set sent on the second cell is {SSB0', SSB1', SSB2', SSB3'}. Specifically, the terminal device can determine, according to the first configuration information, the POs respectively associated with {SSB0', SSB1', SSB2', SSB3'} of the second cell, and the terminal device also determines, according to the first configuration information, that SSB0 on the first cell and SSB0 on the second cell have a QCL relationship (i.e., SSB0 and SSB0' have a QCL relationship), and that SSB1 on the first cell and SSB2 on the second cell have a QCL relationship (i.e., SSB1 and SSB2' have a QCL relationship). Therefore, the terminal device can monitor the PO associated with SSB0' or the PO associated with SSB2' on the second cell.

In the above embodiment, the network device of the first cell sends the configuration information related to the paging channel of the second cell to the terminal device. The terminal device can obtain a paging message by monitoring the PEI-O and/or PO configured for the second cell on the second cell. During this process, the network device of the first cell can turn off the transmission of the corresponding paging channel, thereby achieving network energy saving.

In some embodiments, the configuration information related to the paging channel includes configuration information related to a paging channel of the first cell.

In some embodiments, the terminal device monitors a paging channel on the second cell according to the configuration information related to the paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

Within the paging DRX cycle of the first cell, the terminal device can monitor a paging channel on the first cell. In some embodiments, the length of the paging DRX cycle of the first cell is used to determine a PF and a PO.

The cell DTX cycle configuration of the first cell includes an active period and/or an inactive period configuration of the DTX of the first cell, and the cell DRX cycle configuration of the first cell includes an active period and/or an inactive period configuration of the DRX of the first cell. In some embodiments, the cell DTX cycle configuration of the first cell is used to determine the PF and PO, and/or the cell DRX cycle configuration of the first cell is used to determine the PF and PO.

In some embodiments, the number of SSBs of the first cell includes the number of actually transmitted SSBs in the SSB transmission occasion set on the first cell.

In some embodiments, the SSB set of the first cell includes the set of actually transmitted SSBs in the SSB transmission occasion set on the first cell.

In some embodiments, a PO is a set of consecutive PDCCH monitoring occasions. The number of PDCCH monitoring occasions included in this set of PDCCH monitoring occasions can be obtained by multiplying the number of SSBs of the first cell by the number of PDCCH monitoring occasions corresponding to one SSB of the first cell.

In some embodiments, a PEI-O is a set of consecutive PDCCH monitoring occasions. The number of PDCCH monitoring occasions included in this set of PDCCH monitoring occasions can be obtained by multiplying the number of SSBs of the first cell by the number of PDCCH monitoring occasions corresponding to one SSB of the first cell. In some embodiments, when the paging channel includes the P-PDCCH, the configuration information related to the paging channel of the first cell is used to determine a paging search space associated with the first cell on the second cell. That is, in some embodiments, the terminal device can determine, according to the configuration information related to the paging channel, the paging search space associated with the first cell on the second cell.

In some embodiments, in the paging search space associated with the first cell on the second cell, the terminal device can monitor the PO associated with the SSB of the first cell, thereby receiving a paging message.

In some embodiments, when the configuration information related to the paging channel of the first cell is not used to determine the paging search space associated with the first cell on the second cell, the paging search space associated with the first cell on the second cell is the search space #0 of the second cell. That is, in some embodiments, the search space #0 of the second cell is used as a default search space for the terminal device to monitor to receive the paging message.

In some embodiments, when the paging channel includes the PEI-PDCCH, the configuration information related to the paging channel of the first cell is used to determine at least one of the following information: a PEI search space associated with the first cell on the second cell, a number of POs configured for the first cell, and a number of subgroups included in one PO configured for the first cell. That is, in some embodiments, the terminal device can determine, according to the configuration information related to the paging channel, the PEI search space associated with the first cell on the second cell.

In some embodiments, in the PEI search space associated with the first cell on the second cell, the terminal device can monitor the PEI-O associated with the SSB of the first cell, thereby receiving a PEI.

In some embodiments, the number of bits included in the paging indication field in the PEI-PDCCH can be obtained by multiplying the number of POs configured for the first cell by the number of subgroups included in one PO configured for the first cell.

In some embodiments, when the configuration information related to the paging channel of the first cell is not used to determine the PEI search space associated with the first cell on the second cell, the PEI search space associated with the first cell on the second cell is the search space #0 of the second cell. That is, in some embodiments, the search space #0 of the second cell is used as a default search space for the terminal device to monitor to receive the PEI.

In some embodiments, the first configuration information is also used to determine at least one of the following information: a search space #0 of the second cell, and an initial downlink BWP configuration of the second cell. In some embodiments, the terminal device determines the paging search space and/or the PEI search space associated with the first cell on the second cell, according to the search space #0 of the second cell and/or the initial downlink BWP configuration of the second cell.

In some embodiments, the terminal device determines the search space #0 of the second cell as the paging search space and/or the PEI search space associated with the first cell on the second cell.

In some embodiments, the terminal device determines the paging search space and/or the PEI search space associated with the first cell on the second cell according to the initial downlink BWP configuration of the second cell.

In some embodiments, the terminal device determines the search space #0 of the second cell as the paging search space and/or the PEI search space associated with the first cell on the second cell, and determines, according to the initial downlink BWP configuration of the second cell, the position of the paging search space and/or the PEI search space associated with the first cell on the second cell within the initial downlink BWP.

For example, please refer to FIG. 7, which illustrates a schematic diagram of monitoring a paging occasion on a second cell provided by another embodiment of the disclosure. As illustrated in FIG. 7, a terminal device receives first configuration information sent by a network device of a first cell, where the first configuration information includes an identifier of the second cell and configuration information related to a paging channel of the first cell on the second cell. Herein, the SSB set sent on the first cell is {SSB0, SSB1}, and the SSB set sent on the second cell is {SSB0', SSB1', SSB2', SSB3'}. Specifically, the terminal device can determine, according to the first configuration information, the positions of the POs respectively associated with {SSB0, SSB1} of the first cell on the second cell. Therefore, the terminal device can monitor, on the second cell, the PO associated with SSB0 or SSB1 of the first cell.

In the above embodiment, the PEI-O and/or PO configured for the first cell are configured on the second cell, and the network device of the first cell sends the configuration information related to the paging channel of the first cell to the terminal device. The terminal device can obtain a paging message by monitoring, on the second cell, the PEI-O and/or PO configured for the first cell. During this process, the network device of the first cell can turn off the transmission of the corresponding paging channel, thereby achieving network energy saving.

In some embodiments, the PEI-O of the second cell has an association relationship with the PO of the second cell.

That the PEI-O of the second cell has an association relationship with the PO of the second cell means that a PEI obtained by monitoring the PEI-O of the second cell can indicate whether the terminal device needs to receive a paging message at the PO of the second cell.

In some embodiments, the terminal device monitors a PEI-PDCCH at the PEI-O of the second cell according to the first configuration information.

In some embodiments, the terminal device determines whether to monitor a P-PDCCH at the PO of the second cell according to a monitoring result of the PEI-PDCCH.

In some embodiments, when the monitoring result of the PEI-PDCCH is that a first PEI is monitored at the PEI-O of the second cell and the first PEI indicates to the terminal device to monitor the PO, the terminal device monitors the P-PDCCH at the PO of the second cell.

In some embodiments, when the monitoring result of the PEI-PDCCH is that the first PEI is monitored at the PEI-O of the second cell but the first PEI does not indicate to the terminal device to monitor the PO, or when the monitoring result of the PEI-PDCCH is that no PEI is monitored at the PEI-O of the second cell, the terminal device does not monitor the P-PDCCH at the PO of the second cell.

In the above embodiment, the terminal device can obtain a paging message by monitoring the PEI-PDCCH at the PEI-O on the second cell and monitoring the P-PDCCH at the PO on the second cell. During this process, the network device of the first cell can turn off the transmission of the PEI and the paging message, thereby achieving network energy saving.

In some embodiments, the PEI-O of the second cell has an association relationship with the PO of the first cell.

That the PEI-O of the second cell has an association relationship with the PO of the first cell means that a PEI obtained by monitoring the PEI-O of the second cell can indicate whether the terminal device needs to receive a paging message at the PO of the first cell.

In some embodiments, the terminal device monitors a PEI-PDCCH at the PEI-O of the second cell according to the first configuration information.

In some embodiments, the terminal device determines whether to monitor a P-PDCCH at the PO of the first cell according to a monitoring result of the PEI-PDCCH.

In some embodiments, when the monitoring result of the PEI-PDCCH is that a second PEI is monitored at the PEI-O of the second cell and the second PEI indicates to the terminal device to monitor the PO, the terminal device monitors the P-PDCCH at the PO of the first cell.

In some embodiments, when the monitoring result of the PEI-PDCCH is that the second PEI is monitored at the PEI-O of the second cell but the second PEI does not indicate to the terminal device to monitor the PO, or when the monitoring result of the PEI-PDCCH is that no PEI is monitored at the PEI-O of the second cell, the terminal device does not monitor the P-PDCCH at the PO of the first cell.

In the above embodiment, the terminal device can obtain a paging message by monitoring the PEI-PDCCH at the PEI-O on the second cell and monitoring the P-PDCCH at the PO on the first cell. During this process, the network device of the first cell can turn off the transmission of the PEI, thereby achieving network energy saving.

In some embodiments, the PEI-O of the first cell has an association relationship with the PO of the second cell.

That the PEI-O of the first cell has an association relationship with the PO of the second cell means that a PEI obtained by monitoring the PEI-O of the first cell can indicate whether the terminal device needs to receive a paging message at the PO of the second cell.

In some embodiments, the terminal device monitors a PEI-PDCCH at the PEI-O of the first cell.

In some embodiments, the terminal device determines whether to monitor a P-PDCCH at the PO of the second cell according to a monitoring result of the PEI-PDCCH.

In some embodiments, when the monitoring result of the PEI-PDCCH is that a third PEI is monitored at the PEI-O of the first cell and the third PEI indicates to the terminal device to monitor the PO, the terminal device monitors the P-PDCCH at the PO of the second cell.

In some embodiments, when the monitoring result of the PEI-PDCCH is that the third PEI is monitored at the PEI-O of the first cell and the third PEI does not indicate to the terminal device to monitor the PO, or when the monitoring result of the PEI-PDCCH is that no PEI is monitored at the PEI-O of the first cell, the terminal device does not monitor the P-PDCCH at the PO of the second cell.

In the above embodiment, the terminal device can obtain a paging message by monitoring the PEI-PDCCH at the PEI-O on the first cell and monitoring the P-PDCCH at the PO on the second cell. During this process, the network device of the first cell can turn off the transmission of the paging message, thereby achieving network energy saving.

In the technical solution provided by the embodiments of the disclosure, after receiving first configuration information sent by a network device of a first cell, a terminal device monitors a paging channel on a second cell according to the first configuration information which includes configuration information related to the paging channel. This enables the terminal device to obtain a paging message through the second cell in a case where the first cell does not send the paging channel. That is, through this enhanced paging mechanism, energy consumption of the network device can be saved while ensuring network communication performance.

Please refer to FIG. 8, which illustrates a flowchart of a wireless communication method provided by another embodiment of the disclosure. The method is performed by a network device of a first cell. The method may include step 810.

Step 810: The network device of the first cell sends first configuration information to a terminal device, where the first configuration information includes configuration information related to a paging channel, and the first configuration information is used for the terminal device to monitor a paging channel on a second cell.

In some embodiments, the first configuration information includes an identifier of the second cell.

In some embodiments, the first cell is a primary cell of the terminal device, and the second cell is a secondary cell of the terminal device.

In some embodiments, the configuration information related to the paging channel includes configuration information related to a paging channel of the second cell.

In some embodiments, the configuration information related to the paging channel of the second cell is used to determine at least one of the following information: a search space #0 of the second cell, a length of a paging DRX cycle of the second cell, a cell DTX cycle configuration of the second cell, a cell DRX cycle configuration of the second cell, an initial downlink BWP configuration of the second cell, a number of SSBs of the second cell, an SSB set of the second cell, a number of PDCCH monitoring occasions corresponding to one SSB of the second cell, and a TCI state of the first cell.

In some embodiments, when the paging channel includes a P-PDCCH, the configuration information related to the paging channel of the second cell is further used to determine a paging search space of the second cell.

In some embodiments, when the paging channel includes a PEI-PDCCH, the configuration information related to the paging channel of the second cell is further used to determine at least one of the following information: a PEI search space of the second cell, a number of POs configured for the second cell, and a number of subgroups included in one PO configured for the second cell.

In some embodiments, the TCI state of the first cell is used to determine a beam for a terminal device in the first cell to monitor a paging channel on the second cell.

In some embodiments, the TCI state of the first cell is used to determine an SSB in the second cell that has a QCL relationship with an SSB sent by the first cell.

In some embodiments, the TCI state of the first cell is used to determine an association relationship between the SSB set of the first cell and the SSB set of the second cell.

In some embodiments, the TCI state of the first cell is used to determine an SSB in the second cell that the terminal device is to monitor.

In some embodiments, the configuration information related to the paging channel includes configuration information related to a paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

In some embodiments, when the paging channel includes a P-PDCCH, the configuration information related to the paging channel of the first cell is further used to determine a paging search space associated with the first cell on the second cell.

In some embodiments, when the paging channel includes a PEI-PDCCH, the configuration information related to the paging channel of the first cell is further used to determine at least one of the following information: a PEI search space associated with the first cell on the second cell, a number of POs configured for the first cell, and a number of subgroups included in one PO configured for the first cell.

In some embodiments, the first configuration information is also used to determine at least one of the following information: a search space #0 of the second cell, and an initial downlink BWP configuration of the second cell, where the search space #0 of the second cell and/or the initial downlink BWP configuration of the second cell are used to determine the paging search space and/or the PEI search space associated with the first cell on the second cell.

In some embodiments, the PEI-O of the second cell has an association relationship with the PO of the second cell.

In some embodiments, the first configuration information is used to configure the terminal device to monitor a PEI-PDCCH at the PEI-O of the second cell.

In some embodiments, the first configuration information is used to configure the terminal device to monitor a P-PDCCH at the PO of the second cell.

In some embodiments, the PEI-O of the second cell has an association relationship with the PO of the first cell.

In some embodiments, the first configuration information is used to configure the terminal device to monitor a PEI-PDCCH at the PEI-O of the second cell.

In some embodiments, the first configuration information is used to configure the terminal device to monitor a P-PDCCH at the PO of the first cell.

In some embodiments, the PEI-O of the first cell has an association relationship with the PO of the second cell.

In some embodiments, the first configuration information is used to configure the terminal device to monitor a PEI-PDCCH at the PEI-O of the first cell.

In some embodiments, the first configuration information is used to configure the terminal device to monitor a P-PDCCH at the PO of the second cell.

In the technical solution provided by the embodiments of the disclosure, the network device of the first cell sends first configuration information to the terminal device, where the first configuration information includes configuration information related to a paging channel, and the first configuration information is used for the terminal device to monitor a paging channel on a second cell. This enables the terminal device to obtain a paging message through the second cell in a case where the first cell does not send the paging channel. That is, through this enhanced paging mechanism, energy consumption of the network device can be saved while ensuring network communication performance.

It should be noted that, in the above method embodiments, the steps performed by the terminal device can be implemented independently as a wireless communication method on the terminal device side; the steps performed by the network device can be implemented independently as a wireless communication method on the network device side. For details not disclosed in the embodiment of either side, reference may be made to the embodiments of the other side.

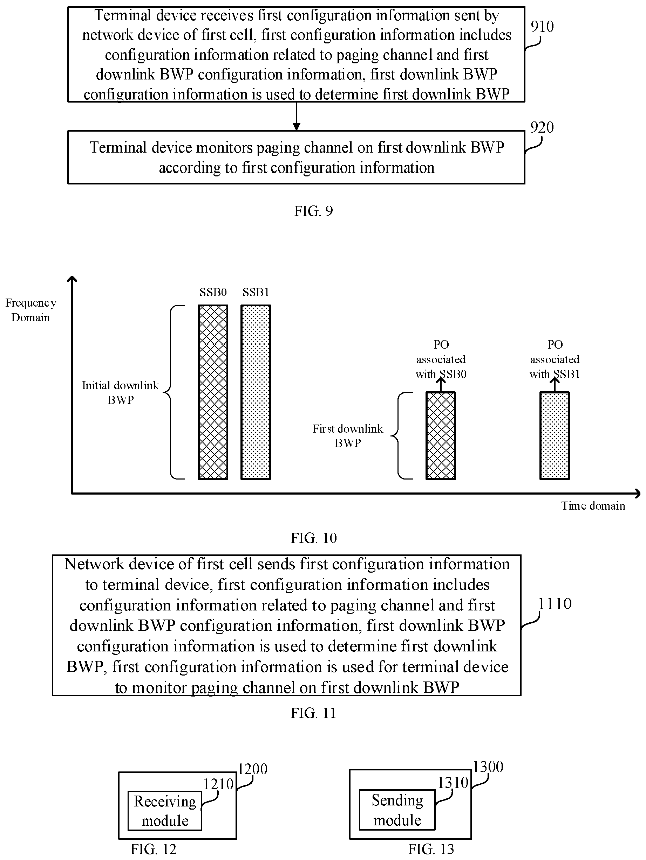

Please refer to FIG. 9, which illustrates a flowchart of a wireless communication method provided by another embodiment of the disclosure. The method is performed by a terminal device. The method may include at least one of steps 910-920.

Step 910: A terminal device receives first configuration information sent by a network device of a first cell, where the first configuration information includes configuration information related to a paging channel and first downlink BWP configuration information, and the first downlink BWP configuration information is used to determine a first downlink BWP.

The first downlink BWP is a BWP configured by the network device for sending a paging channel.

In some embodiments, the first downlink BWP is configured by the network device of the first cell. In other embodiments, the first downlink BWP is configured by a second cell different from the first cell.

Step 920: The terminal device monitors a paging channel on the first downlink BWP according to the first configuration information.

In some embodiments, the terminal device monitors a P-PDCCH at a PO of the first downlink BWP.

In some embodiments, the terminal device monitors a PEI-PDCCH at a PEI-O of the first downlink BWP.

In some embodiments, the configuration information related to the paging channel is configuration information related to a paging channel of the first cell.

In some embodiments, the terminal device monitors a paging channel on the first downlink BWP according to the configuration information related to the paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

Within the paging DRX cycle of the first cell, the terminal device can monitor a paging channel on the first cell. In some embodiments, the length of the paging DRX cycle of the first cell is used to determine a PF and a PO.

The cell DTX cycle configuration of the first cell includes an active period and/or an inactive period configuration of the DTX of the first cell, and the cell DRX cycle configuration of the first cell includes an active period and/or an inactive period configuration of the DRX of the first cell. In some embodiments, the cell DTX cycle configuration of the first cell is used to determine the PF and PO, and/or the cell DRX cycle configuration of the first cell is used to determine the PF and PO.

In some embodiments, the number of SSBs of the first cell includes the number of actually transmitted SSBs in the SSB transmission occasion set of the first cell.

In some embodiments, the SSB set of the first cell includes the set of actually transmitted SSBs in the SSB transmission occasion set of the first cell.

In some embodiments, a PO is a set of consecutive PDCCH monitoring occasions. The number of PDCCH monitoring occasions included in this set of PDCCH monitoring occasions can be obtained by multiplying the number of SSBs of the first cell by the number of PDCCH monitoring occasions corresponding to one SSB of the first cell.

In some embodiments, a PEI-O is a set of consecutive PDCCH monitoring occasions. The number of PDCCH monitoring occasions included in this set of PDCCH monitoring occasions can be obtained by multiplying the number of SSBs of the first cell by the number of PDCCH monitoring occasions corresponding to one SSB of the first cell.

In some embodiments, when the paging channel includes a P-PDCCH, the configuration information related to the paging channel of the first cell is further used to determine a paging search space on the first downlink BWP. That is, in some embodiments, the terminal device can determine the paging search space on the first downlink BWP according to the configuration information related to the paging channel.

In some embodiments, the terminal device can receive a paging message by monitoring the paging search space on the first downlink BWP.

In some embodiments, when the paging channel includes a PEI-PDCCH, the configuration information related to the paging channel of the first cell is further used to determine at least one of the following information: a PEI search space on the first downlink BWP, a number of POs configured for the first cell, and a number of subgroups included in one PO configured for the first cell. That is, in some embodiments, the terminal device can determine the PEI search space on the first downlink BWP according to the configuration information related to the paging channel.

In some embodiments, the terminal device can receive a PEI by monitoring the PEI search space on the first downlink BWP. In some embodiments, the number of bits included in the paging indication field in the PEI-PDCCH can be obtained by multiplying the number of POs configured for the first cell by the number of subgroups included in one PO configured for the first cell.

In some embodiments, a bandwidth of the first downlink BWP does not exceed a preset bandwidth. For example, the bandwidth of the first downlink BWP does not exceed 5 MHz.

In some embodiments, the first downlink BWP is a downlink BWP on the first cell.

In some embodiments, the bandwidth of the first downlink BWP is smaller than a bandwidth of an initial downlink BWP on the first cell.

In some embodiments, when the bandwidth of the first downlink BWP is smaller than the bandwidth of the initial downlink BWP on the first cell, the first downlink BWP is part of the frequency domain resources in the initial downlink BWP on the first cell. For example, a starting position of the first downlink BWP is the same as a starting position of the initial downlink BWP on the first cell, and an ending position of the first downlink BWP is within the initial downlink BWP on the first cell. For another example, the ending position of the first downlink BWP is the same as the ending position of the initial downlink BWP on the first cell, and the starting position of the first downlink BWP is within the initial downlink BWP on the first cell.

In the above embodiment, the transmission of the paging channel can be achieved by using the downlink BWP with a smaller bandwidth on the first cell, thereby saving energy consumption of the network device.

In some embodiments, the first downlink BWP is a downlink BWP on a second cell.

In some embodiments, the second cell and the first cell are different cells.

In some embodiments, the bandwidth of the first downlink BWP is smaller than a bandwidth of an initial downlink BWP on the second cell.

In some embodiments, when the bandwidth of the first downlink BWP is smaller than the bandwidth of the initial downlink BWP on the second cell, the first downlink BWP is part of the frequency domain resources in the initial downlink BWP on the second cell. For example, a starting position of the first downlink BWP is the same as a starting position of the initial downlink BWP on the second cell, and an ending position of the first downlink BWP is within the initial downlink BWP on the second cell. For another example, the ending position of the first downlink BWP is the same as the ending position of the initial downlink BWP on the second cell, and the starting position of the first downlink BWP is within the initial downlink BWP on the second cell.

In the above embodiment, the transmission of the paging channel can be achieved by using the downlink BWP with a smaller bandwidth on the second cell, thereby saving energy consumption of the network device.

For example, please refer to FIG. 10, which illustrates a schematic diagram of a terminal device monitoring a paging occasion on a first downlink bandwidth part provided by an embodiment of the disclosure. As illustrated in FIG. 10, a terminal device receives first configuration information sent by a network device of a first cell, where the first configuration information includes first downlink BWP configuration information on the first cell and configuration information related to a paging channel of the first cell. Herein, the SSB set sent on the first cell is {SSB0, SSB1}, and the bandwidth of the first downlink BWP is smaller than the bandwidth of the initial downlink BWP on the first cell. The terminal device can determine, according to the first configuration information, the positions of the POs respectively associated with {SSB0, SSB1} of the first cell on the first downlink BWP. Therefore, the terminal device can monitor, on the first downlink BWP, the PO associated with SSB0 or SSB1 of the first cell.

In the technical solution provided by the embodiments of the disclosure, after receiving configuration information related to a paging channel and first downlink BWP configuration information used to determine a first downlink BWP, a terminal device monitors a paging channel on the first downlink BWP. This enables the terminal device to receive a paging message using the first downlink BWP. In the above process, the network device can configure a BWP with a small bandwidth as the above-mentioned first downlink BWP according to the actual needs for sending the paging channel, thereby saving energy consumption of the network device while ensuring network communication performance.

Please refer to FIG. 11, which illustrates a flowchart of a wireless communication method provided by another embodiment of the disclosure. The method is performed by a network device of a first cell. The method may include step 1110.

Step 1110: The network device of the first cell sends first configuration information to a terminal device, where the first configuration information includes configuration information related to a paging channel and first downlink BWP configuration information, the first downlink BWP configuration information is used to determine a first downlink BWP, and the first configuration information is used for the terminal device to monitor a paging channel on the first downlink BWP.

In some embodiments, the configuration information related to the paging channel is configuration information related to a paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

In some embodiments, when the paging channel includes a P-PDCCH, the configuration information related to the paging channel of the first cell is further used to determine a paging search space on the first downlink BWP.

In some embodiments, when the paging channel includes a PEI-PDCCH, the configuration information related to the paging channel of the first cell is further used to determine at least one of the following information: a PEI search space on the first downlink BWP, a number of POs configured for the first cell, and a number of subgroups included in one PO configured for the first cell.

In some embodiments, the first downlink BWP is a downlink BWP on the first cell.

In some embodiments, a bandwidth of the first downlink BWP is smaller than a bandwidth of an initial downlink BWP on the first cell.

In some embodiments, when the bandwidth of the first downlink BWP is smaller than the bandwidth of the initial downlink BWP on the first cell, the first downlink BWP is part of the frequency domain resources in the initial downlink BWP on the first cell.

In some embodiments, the first downlink BWP is a downlink BWP on a second cell.

In some embodiments, a bandwidth of the first downlink BWP is smaller than a bandwidth of an initial downlink BWP on the second cell.

In some embodiments, when the bandwidth of the first downlink BWP is smaller than the bandwidth of the initial downlink BWP on the second cell, the first downlink BWP is part of the frequency domain resources in the initial downlink BWP on the second cell.

In the technical solution provided by the embodiments of the disclosure, the network device of the first cell sends first configuration information to the terminal device, where the first configuration information includes configuration information related to a paging channel and first downlink BWP configuration information, the first downlink BWP configuration information is used to determine a first downlink BWP, and the first configuration information is used for the terminal device to monitor a paging channel on the first downlink BWP. This enables the terminal device to receive a paging message using the first downlink BWP. In the above process, the network device can configure a BWP with a small bandwidth as the above-mentioned first downlink BWP according to the actual needs for sending the paging channel, thereby saving energy consumption of the network device while ensuring network communication performance.

It should be noted that, in the above method embodiments, the steps performed by the terminal device can be implemented independently as a wireless communication method on the terminal device side; the steps performed by the network device can be implemented independently as a wireless communication method on the network device side. For details not disclosed in the embodiment of either side, reference may be made to the embodiments of the other side.

Please refer to FIG. 12, which illustrates a block diagram of a wireless communication apparatus provided by an embodiment of the disclosure. The apparatus has the function of implementing the above-mentioned wireless communication method on the terminal device side, and the function can be implemented by hardware or by executing corresponding software by hardware. The apparatus can be the terminal device introduced above, or can be provided in a terminal device. As shown in FIG. 12, the apparatus 1200 may include a receiving module 1210.

The receiving module 1210 is configured to receive first configuration information sent by a network device of a first cell, where the first configuration information includes configuration information related to a paging channel.

The receiving module 1210 is further configured to monitor a paging channel on a second cell according to the first configuration information.

In some embodiments, the configuration information related to the paging channel includes configuration information related to a paging channel of the second cell.

In some embodiments, the configuration information related to the paging channel of the second cell is used to determine at least one of the following information: a search space #0 of the second cell, a length of a paging DRX cycle of the second cell, a cell DTX cycle configuration of the second cell, a cell DRX cycle configuration of the second cell, an initial downlink BWP configuration of the second cell, a number of SSBs of the second cell, an SSB set of the second cell, a number of PDCCH monitoring occasions corresponding to one SSB of the second cell, and a TCI state of the first cell.

In some embodiments, when the paging channel includes a P-PDCCH, the configuration information related to the paging channel of the second cell is used to determine a paging search space of the second cell; and/or, when the paging channel includes a PEI-PDCCH, the configuration information related to the paging channel of the second cell is used to determine at least one of the following information: a PEI search space of the second cell, a number of POs configured for the second cell, and a number of subgroups included in one PO configured for the second cell.

In some embodiments, the TCI state of the first cell is used to determine a beam for a terminal device in the first cell to monitor a paging channel on the second cell; or, the TCI state of the first cell is used to determine an SSB in the second cell that has a QCL relationship with an SSB sent by the first cell; or, the TCI state of the first cell is used to determine an association relationship between the SSB set of the first cell and the SSB set of the second cell; or, the TCI state of the first cell is used to determine an SSB in the second cell that the terminal device is to monitor.

In some embodiments, the configuration information related to the paging channel includes configuration information related to a paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

In some embodiments, when the paging channel includes a P-PDCCH, the configuration information related to the paging channel of the first cell is used to determine a paging search space associated with the first cell on the second cell; and/or, when the paging channel includes a PEI-PDCCH, the configuration information related to the paging channel of the first cell is used to determine at least one of the following information: a PEI search space associated with the first cell on the second cell, a number of POs configured for the first cell, and a number of subgroups included in one PO configured for the first cell.

In some embodiments, the first configuration information is also used to determine at least one of the following information: a search space #0 of the second cell, and an initial downlink BWP configuration of the second cell. The receiving module 1220 is further configured to determine the paging search space and/or the PEI search space associated with the first cell on the second cell according to the search space #0 of the second cell and/or the initial downlink BWP configuration of the second cell.

In some embodiments, a PEI-O of the second cell has an association relationship with a PO of the second cell.

In some embodiments, the receiving module 1210 is configured to monitor a PEI-PDCCH at the PEI-O of the second cell according to the first configuration information. The receiving module 1210 is further configured to determine whether to monitor a P-PDCCH at the PO of the second cell according to a monitoring result of the PEI-PDCCH.

In some embodiments, the receiving module 1210 is configured to monitor the P-PDCCH at the PO of the second cell when the monitoring result of the PEI-PDCCH is that a first PEI is monitored at the PEI-O of the second cell and the first PEI instructs the terminal device to monitor the PO. Alternatively, the receiving module 1210 is configured not to monitor the P-PDCCH at the PO of the second cell when the monitoring result of the PEI-PDCCH is that the first PEI is monitored at the PEI-O of the second cell but the first PEI does not indicate to the terminal device to monitor the PO, or when the monitoring result of the PEI-PDCCH is that no PEI is monitored at the PEI-O of the second cell.

In some embodiments, the PEI-O of the second cell has an association relationship with a PO of the first cell.

In some embodiments, the receiving module 1210 is configured to monitor a PEI-PDCCH at the PEI-O of the second cell according to the first configuration information. The receiving module 1210 is further configured to determine whether to monitor a P-PDCCH at the PO of the first cell according to a monitoring result of the PEI-PDCCH.

In some embodiments, the receiving module 1210 is configured to monitor the P-PDCCH at the PO of the first cell when the monitoring result of the PEI-PDCCH is that a second PEI is monitored at the PEI-O of the second cell and the second PEI indicates to the terminal device to monitor the PO; or, not to monitor the P-PDCCH at the PO of the first cell when the monitoring result of the PEI-PDCCH is that the second PEI is monitored at the PEI-O of the second cell but the second PEI does not indicates to the terminal device to monitor the PO, or when the monitoring result of the PEI-PDCCH is that no PEI is monitored at the PEI-O of the second cell.

In some embodiments, a PEI-O of the first cell has an association relationship with the PO of the second cell.

In some embodiments, the receiving module 1210 is further configured to monitor a PEI-PDCCH at the PEI-O of the first cell; and determine whether to monitor a P-PDCCH at the PO of the second cell according to a monitoring result of the PEI-PDCCH.

In some embodiments, the receiving module 1210 is configured to monitor the P-PDCCH at the PO of the second cell when the monitoring result of the PEI-PDCCH is that a third PEI is monitored at the PEI-O of the first cell and the third PEI indicates to the terminal device to monitor the PO; or, not to monitor the P-PDCCH at the PO of the second cell when the monitoring result of the PEI-PDCCH is that the third PEI is monitored at the PEI-O of the first cell but the third PEI does not indicates to the terminal device to monitor the PO, or when the monitoring result of the PEI-PDCCH is that no PEI is monitored at the PEI-O of the first cell.

In some embodiments, the first configuration information includes an identifier of the second cell.

In some embodiments, the first cell is a primary cell of the terminal device, and the second cell is a secondary cell of the terminal device.

Please refer to FIG. 13, which illustrates a block diagram of a wireless communication apparatus provided by another embodiment of the disclosure. The apparatus has the function of implementing the above-mentioned wireless communication method on the network device side, and the function can be implemented by hardware or by executing corresponding software by hardware. The apparatus can be the network device introduced above, or can be provided in a network device. As shown in FIG. 13, the apparatus 1300 may include: a sending module 1310.

The sending module 1310 is configured to send first configuration information to a terminal device, where the first configuration information includes configuration information related to a paging channel, and the first configuration information is used for the terminal device to monitor the paging channel on a second cell.

In some embodiments, the configuration information related to the paging channel includes configuration information related to a paging channel of the second cell.

In some embodiments, the configuration information related to the paging channel of the second cell is used to determine at least one of the following information: a search space #0 of the second cell, a length of a paging DRX cycle of the second cell, a cell DTX cycle configuration of the second cell, a cell DRX cycle configuration of the second cell, an initial downlink BWP configuration of the second cell, a number of SSBs of the second cell, an SSB set of the second cell, a number of PDCCH monitoring occasions corresponding to one SSB of the second cell, and a TCI state of the first cell.

In some embodiments, when the paging channel includes a P-PDCCH, the configuration information related to the paging channel of the second cell is further used to determine a paging search space of the second cell; and/or, when the paging channel includes a PEI-PDCCH, the configuration information related to the paging channel of the second cell is further used to determine at least one of the following information: a PEI search space of the second cell, a number of POs configured for the second cell, and a number of subgroups included in one PO configured for the second cell.

In some embodiments, the TCI state of the first cell is used to determine a beam for a terminal device in the first cell to monitor a paging channel on the second cell; or, the TCI state of the first cell is used to determine an SSB in the second cell that has a QCL relationship with an SSB sent by the first cell; or, the TCI state of the first cell is used to determine an association relationship between the SSB set of the first cell and the SSB set of the second cell; or, the TCI state of the first cell is used to determine an SSB in the second cell that the terminal device is to monitor.

In some embodiments, the configuration information related to the paging channel includes configuration information related to a paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

In some embodiments, when the paging channel includes a P-PDCCH, the configuration information related to the paging channel of the first cell is further used to determine a paging search space associated with the first cell on the second cell; and/or, when the paging channel includes a PEI-PDCCH, the configuration information related to the paging channel of the first cell is further used to determine at least one of the following information: a PEI search space associated with the first cell on the second cell, a number of POs configured for the first cell, and a number of subgroups included in one PO configured for the first cell.

In some embodiments, the first configuration information is also used to determine at least one of the following information: a search space #0 of the second cell, and an initial downlink BWP configuration of the second cell, where the search space #0 of the second cell and/or the initial downlink BWP configuration of the second cell are used to determine the paging search space and/or the PEI search space associated with the first cell on the second cell.

In some embodiments, a PEI-O of the second cell has an association relationship with a PO of the second cell.

In some embodiments, the first configuration information is used to configure the terminal device to monitor a PEI-PDCCH at the PEI-O of the second cell.

In some embodiments, the first configuration information is used to configure the terminal device to monitor a P-PDCCH at the PO of the second cell.

In some embodiments, the PEI-O of the second cell has an association relationship with a PO of the first cell.

In some embodiments, the first configuration information is used to configure the terminal device to monitor a PEI-PDCCH at the PEI-O of the second cell.

In some embodiments, the first configuration information is used to configure the terminal device to monitor a P-PDCCH at the PO of the first cell.

In some embodiments, a PEI-O of the first cell has an association relationship with the PO of the second cell.

In some embodiments, the first configuration information is used to configure the terminal device to monitor a PEI-PDCCH at the PEI-O of the first cell.

In some embodiments, the first configuration information is used to configure the terminal device to monitor a P-PDCCH at the PO of the second cell.

In some embodiments, the first configuration information includes an identifier of the second cell.

In some embodiments, the first cell is a primary cell of the terminal device, and the second cell is a secondary cell of the terminal device.

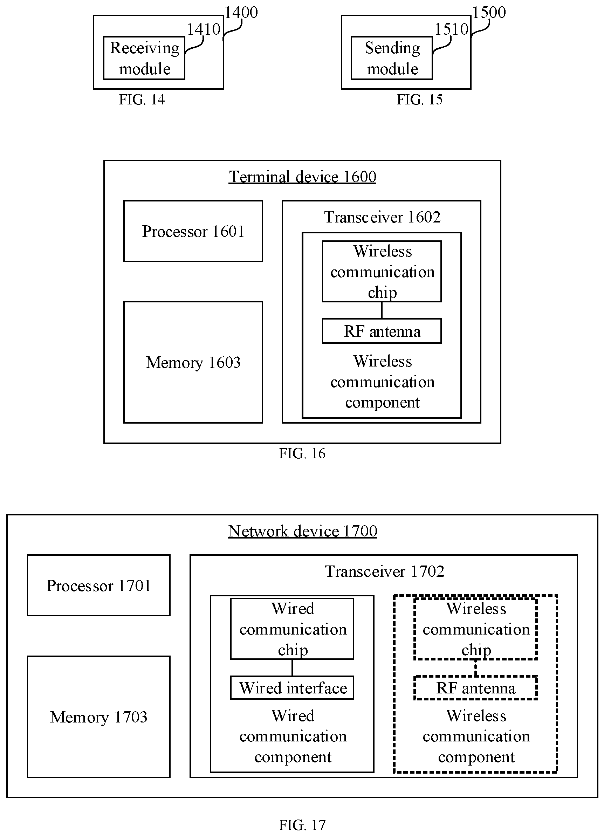

Please refer to FIG. 14, which illustrates a block diagram of a wireless communication apparatus provided by another embodiment of the disclosure. The apparatus has the function of implementing the above-mentioned wireless communication method on the terminal device side, and the function can be implemented by hardware or by executing corresponding software by hardware. The apparatus can be the terminal device introduced above, or can be provided in a terminal device. As shown in Figure 14, the apparatus 1400 may include: a receiving module 1410.

The receiving module 1410 is configured to receive first configuration information sent by a network device of a first cell, where the first configuration information includes configuration information related to a paging channel and first downlink BWP configuration information, and the first downlink BWP configuration information is used to determine a first downlink BWP.

The receiving module 1410 is further configured to monitor the paging channel on the first downlink BWP according to the first configuration information.

In some embodiments, the configuration information related to the paging channel is configuration information related to a paging channel of the first cell. The receiving module 1410 is configured to monitor the paging channel on the first downlink BWP according to the configuration information related to the paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

In some embodiments, when the paging channel includes a P-PDCCH, the configuration information related to the paging channel of the first cell is further used to determine a paging search space on the first downlink BWP; and/or, when the paging channel includes a PEI-PDCCH, the configuration information related to the paging channel of the first cell is further used to determine at least one of the following information: a PEI search space on the first downlink BWP, a number of POs configured for the first cell, and a number of subgroups included in one PO configured for the first cell.

In some embodiments, the first downlink BWP is a downlink BWP on the first cell.

In some embodiments, a bandwidth of the first downlink BWP is smaller than a bandwidth of an initial downlink BWP on the first cell.

In some embodiments, when the bandwidth of the first downlink BWP is smaller than the bandwidth of the initial downlink BWP on the first cell, the first downlink BWP is part of the frequency domain resources in the initial downlink BWP on the first cell.

In some embodiments, the first downlink BWP is a downlink BWP on a second cell.

In some embodiments, a bandwidth of the first downlink BWP is smaller than a bandwidth of an initial downlink BWP on the second cell.

In some embodiments, when the bandwidth of the first downlink BWP is smaller than the bandwidth of the initial downlink BWP on the second cell, the first downlink BWP is part of the frequency domain resources in the initial downlink BWP on the second cell

Please refer to FIG. 15, which illustrates a block diagram of a wireless communication apparatus provided by another embodiment of the disclosure. The apparatus has the function of implementing the above-mentioned wireless communication method on the network device side, and the function can be implemented by hardware or by executing corresponding software by hardware. The apparatus can be the network device introduced above, or can be provided in a network device. As illustrated in FIG. 15, the apparatus 1500 may include a sending module 1510.

The sending module 1510 is configured to send first configuration information to a terminal device, where the first configuration information includes configuration information related to a paging channel and first downlink BWP configuration information, the first downlink BWP configuration information is used to determine a first downlink BWP, and the first configuration information is used for the terminal device to monitor the paging channel on the first downlink BWP.

In some embodiments, the configuration information related to the paging channel is configuration information related to a paging channel of the first cell.

In some embodiments, the configuration information related to the paging channel of the first cell is used to determine at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

In some embodiments, when the paging channel includes a P-PDCCH, the configuration information related to the paging channel of the first cell is further used to determine a paging search space on the first downlink BWP; and/or, when the paging channel includes a PEI-PDCCH, the configuration information related to the paging channel of the first cell is further used to determine at least one of the following information: a PEI search space on the first downlink BWP, a number of POs configured for the first cell, and a number of subgroups included in one PO configured for the first cell.

In some embodiments, the first downlink BWP is a downlink BWP on the first cell.

In some embodiments, a bandwidth of the first downlink BWP is smaller than a bandwidth of an initial downlink BWP on the first cell.

In some embodiments, when the bandwidth of the first downlink BWP is smaller than the bandwidth of the initial downlink BWP on the first cell, the first downlink BWP is part of the frequency domain resources in the initial downlink BWP on the first cell.

In some embodiments, the first downlink BWP is a downlink BWP on a second cell.

In some embodiments, a bandwidth of the first downlink BWP is smaller than a bandwidth of an initial downlink BWP on the second cell.

In some embodiments, when the bandwidth of the first downlink BWP is smaller than the bandwidth of the initial downlink BWP on the second cell, the first downlink BWP is part of the frequency domain resources in the initial downlink BWP on the second cell.

It should be noted that, when implementing its functions, the apparatus provided in the above embodiments are illustrated only by the division of the above functional modules. In practical applications, the above functions can be allocated to different functional modules according to actual needs, that is, the internal structure of the device is divided into different functional modules to complete all or part of the functions described above.

Regarding the apparatus in the above embodiments, the specific manner in which each module performs operations has been described in detail in the embodiments related to the method, and will not be elaborated here. For details not explicitly described in the apparatus embodiments, reference may be made to the above method embodiments.

Please refer to FIG. 16, which illustrates a schematic structural diagram of a terminal device provided by an embodiment of the disclosure. The terminal device 1600 can be used to perform the method steps performed by the terminal device in the above embodiments. The terminal device 1600 may include: a processor 1601, a transceiver 1602, and a memory 1603. The processor is used to control sending and/or receiving. The transceiver 1602 can be used to implement the functions of sending and/or receiving, for example, to implement the functions of the above receiving module 1210 or receiving module 1410.

The processor 1601 includes one or more processing cores, and the processor 1601 executes various functional applications and information processing by running software programs and modules.

The transceiver 1602 may include a receiver and a transmitter. For example, the receiver and the transmitter can be implemented as the same wireless communication component, which may include a wireless communication chip and a radio frequency antenna.

The memory 1603 can be connected to the processor 1601 and the transceiver 1602.

The memory 1603 can be configured to store computer programs executed by the processor, and the processor 1601 is used to execute the computer programs to implement the steps in the above method embodiments.

Furthermore, the memory 1603 can be implemented by any type of volatile or non-volatile storage device or a combination thereof. Volatile or non-volatile storage devices include but are not limited to: magnetic or optical disks, electrically erasable programmable read-only memory (EEPROM), erasable programmable read-only memory (EPROM), static random access memory (SRAM), read-only memory (ROM), magnetic memory, flash memory, and programmable read-only memory (PROM).

In some embodiments, the transceiver 1602 is configured to receive first configuration information sent by a network device of a first cell, where the first configuration information includes configuration information related to a paging channel; and monitor a paging channel on a second cell according to the first configuration information.

In some embodiments, the transceiver 1602 is configured to receive first configuration information sent by a network device of a first cell, where the first configuration information includes configuration information related to a paging channel and first downlink BWP configuration information, the first downlink BWP configuration information is used to determine a first downlink BWP; and monitor the paging channel on the first downlink BWP according to the first configuration information.

For details not explicitly described in this embodiment, reference may be made to the above embodiments, which will not be repeated here.

Please refer to FIG. 17, which illustrates a schematic structural diagram of a network device provided by an embodiment of the disclosure. The network device 1700 can be used to perform the method steps performed by the network device in the above embodiments. The network device 1700 may include: a processor 1701, a transceiver 1702, and a memory 1703. The processor 1701 can be used to control sending and/or receiving. The transceiver 1702 can be used to implement the functions of sending and/or receiving, for example, to implement the functions of the above sending module 1310 or sending module 1510.

The processor 1701 includes one or more processing cores, and the processor 1701 executes various functional applications and information processing by running software programs and modules.

The transceiver 1702 may include a receiver and a transmitter. For example, the transceiver 1702 may include a wired communication component, which may include a wired communication chip and a wired interface (such as an optical fiber interface). Optionally, the transceiver 1702 may also include a wireless communication component, which may include a wireless communication chip and a radio frequency antenna.

The memory 1703 can be connected to the processor 1701 and the transceiver 1702.

The memory 1703 can be used to store computer programs executed by the processor, and the processor 1701 is configured to execute the computer programs to implement the steps performed by the network device in the above method embodiments.

Furthermore, the memory 1703 can be implemented by any type of volatile or non-volatile storage device or a combination thereof. Volatile or non-volatile storage devices include but are not limited to: magnetic or optical disks, electrically erasable programmable read-only memory (EEPROM), erasable programmable read-only memory (EPROM), static random access memory (SRAM), read-only memory (ROM), magnetic memory, flash memory, and programmable read-only memory (PROM).

In some embodiments, the transceiver 1702 is configured to send first configuration information to a terminal device, where the first configuration information includes configuration information related to a paging channel, and the first configuration information is used for the terminal device to monitor a paging channel on a second cell.

In some embodiments, the transceiver 1702 is further configured to send first configuration information to a terminal device, where the first configuration information includes configuration information related to a paging channel and first downlink BWP configuration information, the first downlink BWP configuration information is used to determine a first downlink BWP, and the first configuration information is used for the terminal device to monitor a paging channel on the first downlink BWP.

For details not explicitly described in this embodiment, reference may be made to the above embodiments, which will not be repeated here.

Embodiments of the disclosure also provide a computer-readable storage medium, in which a computer program is stored, and the computer program is used to be executed by a processor to implement the above wireless communication method on the terminal device side, or to implement the above wireless communication method on the network device side. In some embodiments, the computer-readable storage medium may include: read-only memory (ROM), random-access memory (RAM), solid state drives (SSD), or optical disks, etc. Among them, the random access memory may include resistance random access memory (ReRAM) and dynamic random access memory (DRAM).

Embodiments of the disclosure also provide a chip, where the chip includes programmable logic circuits and/or program instructions, and when the chip is running, it is used to implement the above wireless communication method on the terminal device side, or to implement the above wireless communication method on the network device side.

Embodiments of the disclosure also provide a computer program product, where the computer program product includes a computer program, the computer program is stored in a computer-readable storage medium, and a processor reads and executes the computer program from the computer-readable storage medium to implement the above wireless communication method on the terminal device side, or to implement the above wireless communication method on the network device side.

It should be understood that the "indication" mentioned in the embodiments of the disclosure may be a direct indication, an indirect indication, or an indication of an association relationship. For example, A indicates B, which may mean that A directly indicates B, such that B can be obtained through A; it may also mean that A indirectly indicates B, such that A indicates C, and B can be obtained through C; it may also mean that there is an association relationship between A and B.

In the description of the embodiments of the disclosure, the term "correspondence" may mean that there is a direct or indirect correspondence between the two, or that there is an association relationship between the two, or a relationship such as indication and being indicated, configuration and being configured, etc.

In some embodiments of the disclosure, "predefined" may be implemented by pre-saving corresponding codes, tables, or other methods that can be used to indicate relevant information in a device (for example, including a terminal device and a network device). The disclosure does not limit the specific implementation method thereof. For example, "predefined" may refer to being defined in a protocol.

In some embodiments of the disclosure, the "protocol" may refer to a standard protocol in the communication field, for example, it may include LTE protocols, NR protocols, and related protocols applied to future communication systems, which is not limited in the disclosure.

The term "plurality" mentioned herein refers to two or more. "And/or" describes the association relationship of associated objects, indicating that there may be three relationships. For example, A and/or B may mean: A exists alone, A and B exist simultaneously, and B exists alone. The character "/" generally indicates that the associated objects before and after are in an "or" relationship.

The terms "greater than or equal to" mentioned herein may mean greater than or equal to, or greater than; "less than or equal to" may mean less than or equal to, or less than.

In addition, the step numbers described herein merely exemplarily illustrate one possible execution order among the steps. In some other embodiments, the above steps may not be executed in the order of the numbers. For example, two steps with different numbers may be executed simultaneously, or two steps with different numbers may be executed in an order opposite to that shown in the figure, which is not limited in the embodiments of the disclosure.

Those skilled in the art should be aware that in one or more examples above, the functions described in the embodiments of the disclosure can be implemented by hardware, software, firmware, or any combination thereof. When implemented by software, these functions can be stored in a computer-readable medium or transmitted as one or more instructions or code on a computer-readable medium. Computer-readable media includes computer storage media and communication media, where communication media includes any medium that facilitates the transfer of a computer program from one place to another. A storage media can be any available media that can be accessed by a general-purpose or special-purpose computer.

The above are only exemplary embodiments of the disclosure and are not intended to limit the disclosure. Any modifications, equivalent substitutions, improvements, etc. made within the spirit and principles of the disclosure shall be included in the protection scope of the disclosure.

## Claims

1. A wireless communication method, performed by a terminal device and comprising:
receiving first configuration information sent by a network device of a first cell, wherein the first configuration information comprises configuration information related to a paging channel; and
monitoring the paging channel on a second cell according to the first configuration information.

2. The method according to claim 1, wherein the configuration information related to the paging channel comprises configuration information related to a paging channel of the second cell.

3. The method according to claim 2, wherein the configuration information related to the paging channel of the second cell is used for determining at least one of the following information: a search space #0 of the second cell, a length of a paging discontinuous reception (DRX) cycle of the second cell, a cell discontinuous transmission (DTX) cycle configuration of the second cell, a cell DRX cycle configuration of the second cell, an initial downlink bandwidth part (BWP) configuration of the second cell, a number of synchronization signal blocks (SSBs) of the second cell, an SSB set of the second cell, a number of physical downlink control channel (PDCCH) monitoring occasions corresponding to one SSB of the second cell, and a transmission configuration indicator (TCI) state of the first cell.

4. The method according to claim 2 or 3, wherein
in a case where the paging channel comprises a paging-physical downlink control channel (P-PDCCH), the configuration information related to the paging channel of the second cell is used for determining a paging search space of the second cell; and/or
in a case where the paging channel comprises a paging early indication-physical downlink control channel (PEI-PDCCH), the configuration information related to the paging channel of the second cell is used for determining at least one of the following information: a PEI search space of the second cell, a number of paging occasions (POs) configured for the second cell, and a number of subgroups comprised in one PO configured for the second cell.

5. The method according to claim 3 or 4, wherein
the TCI state of the first cell is used for determining a beam for a terminal device in the first cell to monitor the paging channel on the second cell; or
the TCI state of the first cell is used for determining an SSB in the second cell that has a quasi-co-location (QCL) relationship with an SSB sent by the first cell; or
the TCI state of the first cell is used for determining an association relationship between an SSB set of the first cell and an SSB set of the second cell; or
the TCI state of the first cell is used for determining an SSB in the second cell to be monitored by the terminal device.

6. The method according to claim 1, wherein the configuration information related to the paging channel comprises configuration information related to a paging channel of the first cell.

7. The method according to claim 6, wherein the configuration information related to the paging channel of the first cell is used for determining at least one of the following information:
a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

8. The method according to claim 6 or 7, wherein,
in a case where the paging channel comprises a P-PDCCH, the configuration information related to the paging channel of the first cell is used for determining a paging search space associated with the first cell on the second cell; and/or
in a case where the paging channel comprises a PEI-PDCCH, the configuration information related to the paging channel of the first cell is used for determining at least one of the following information: a PEI search space associated with the first cell on the second cell, a number of POs configured for the first cell, and a number of subgroups comprised in one PO configured for the first cell.

9. The method according to any one of claims 6 to 8, wherein the first configuration information is further used for determining at least one of the following information: a search space #0 of the second cell, and an initial downlink BWP configuration of the second cell; the method further comprises:
determining a paging search space and/or a PEI search space associated with the first cell on the second cell according to the search space #0 of the second cell and/or the initial downlink BWP configuration of the second cell.

10. The method according to any one of claims 1 to 9, wherein a paging early indication occasion (PEI-O) of the second cell has an association relationship with a PO of the second cell.

11. The method according to claim 10, wherein monitoring the paging channel on the second cell according to the first configuration information comprises:
monitoring a PEI-PDCCH at the PEI-O of the second cell according to the first configuration information;
the method further comprises:
determining whether to monitor a P-PDCCH at the PO of the second cell according to a monitoring result of the PEI-PDCCH.

12. The method according to claim 11, wherein determining whether to monitor the P-PDCCH at the PO of the second cell according to the monitoring result of the PEI-PDCCH comprises:
in a case where the monitoring result of the PEI-PDCCH is that a first PEI is monitored at the PEI-O of the second cell and the first PEI indicates to the terminal device to monitor a PO, monitoring the P-PDCCH at the PO of the second cell; or
in a case where the monitoring result of the PEI-PDCCH is that the first PEI is monitored at the PEI-O of the second cell and the first PEI does not indicate to the terminal device to monitor a PO, or in a case where the monitoring result of the PEI-PDCCH is that no PEI is monitored at the PEI-O of the second cell, not monitoring the P-PDCCH at the PO of the second cell.

13. The method according to any one of claims 1 to 9, wherein a PEI-O of the second cell has an association relationship with a PO of the first cell.

14. The method according to claim 13, wherein monitoring the paging channel on the second cell according to the first configuration information comprises:
monitoring a PEI-PDCCH at the PEI-O of the second cell according to the first configuration information;
the method further comprises:
determining whether to monitor a P-PDCCH at the PO of the first cell according to a monitoring result of the PEI-PDCCH.

15. The method according to claim 14, wherein determining whether to monitor the P-PDCCH at the PO of the first cell according to the monitoring result of the PEI-PDCCH comprises:
in a case where the monitoring result of the PEI-PDCCH is that a second PEI is monitored at the PEI-O of the second cell and the second PEI indicates to the terminal device to monitor a PO, monitoring the P-PDCCH at the PO of the first cell; or
in a case where the monitoring result of the PEI-PDCCH is that the second PEI is monitored at the PEI-O of the second cell and the second PEI does not indicate to the terminal device to monitor a PO, or in a case where the monitoring result of the PEI-PDCCH is that no PEI is monitored at the PEI-O of the second cell, not monitoring the P-PDCCH at the PO of the first cell.

16. The method according to any one of claims 1 to 9, wherein a PEI-O of the first cell has an association relationship with a PO of the second cell.

17. The method according to claim 16, wherein the method further comprises:
monitoring a PEI-PDCCH at the PEI-O of the first cell;
determining whether to monitor a P-PDCCH at the PO of the second cell according to a monitoring result of the PEI-PDCCH.

18. The method according to claim 17, wherein determining whether to monitor the P-PDCCH at the PO of the second cell according to the monitoring result of the PEI-PDCCH comprises:
in a case where the monitoring result of the PEI-PDCCH is that a third PEI is monitored at the PEI-O of the first cell and the third PEI indicates to the terminal device to monitor a PO, monitoring the P-PDCCH at the PO of the second cell; or
in a case where the monitoring result of the PEI-PDCCH is that the third PEI is monitored at the PEI-O of the first cell and the third PEI does not indicate to the terminal device to monitor a PO, or in a case where the monitoring result of the PEI-PDCCH is that no PEI is monitored at the PEI-O of the first cell, not monitoring the P-PDCCH at the PO of the second cell.

19. The method according to any one of claims 1 to 18, wherein the first configuration information comprises an identifier of the second cell.

20. The method according to any one of claims 1 to 19, wherein the first cell is a primary cell of the terminal device, and the second cell is a secondary cell of the terminal device.

21. A wireless communication method, performed by a network device of a first cell and comprising:
sending first configuration information to a terminal device, wherein the first configuration information comprises configuration information related to a paging channel, and the first configuration information is used for the terminal device to monitor the paging channel on a second cell.

22. The method according to claim 21, wherein the configuration information related to the paging channel comprises configuration information related to a paging channel of the second cell.

23. The method according to claim 22, wherein the configuration information related to the paging channel of the second cell is used for determining at least one of the following information: a search space #0 of the second cell, a length of a paging DRX cycle of the second cell, a cell paging discontinuous reception (DRX) cycle configuration of the second cell, a cell discontinuous transmission (DTX) cycle configuration of the second cell, an initial downlink bandwidth part (BWP) configuration of the second cell, a number of synchronization signal blocks (SSBs) of the second cell, an SSB set of the second cell, a number of physical downlink control channel (PDCCH) monitoring occasions corresponding to one SSB of the second cell, and a transmission configuration indicator (TCI) state of the first cell.

24. The method according to claim 22 or 23, wherein
in a case where the paging channel comprises a paging-physical downlink control channel (P-PDCCH), the configuration information related to the paging channel of the second cell is further used for determining a paging search space of the second cell; and/or
in a case where the paging channel comprises a paging early indication-physical downlink control channel (PEI-PDCCH), the configuration information related to the paging channel of the second cell is further used for determining at least one of the following information: a PEI search space of the second cell, a number of paging occasions (POs) configured for the second cell, and a number of subgroups comprised in one PO configured for the second cell.

25. The method according to claim 23 or 24, wherein
the TCI state of the first cell is used for determining a beam for the terminal device in the first cell to monitor the paging channel on the second cell; or
the TCI state of the first cell is used for determining an SSB in the second cell that has a quasi-co-location (QCL) relationship with an SSB sent by the first cell; or
the TCI state of the first cell is used for determining an association relationship between an SSB set of the first cell and an SSB set of the second cell; or
the TCI state of the first cell is used for determining an SSB in the second cell to be monitored by the terminal device.

26. The method according to claim 21, wherein the configuration information related to the paging channel comprises configuration information related to a paging channel of the first cell.

27. The method according to claim 26, wherein the configuration information related to the paging channel of the first cell is used for determining at least one of the following information: a length of a paging DRX cycle of the first cell, a cell DTX cycle configuration of the first cell, a cell DRX cycle configuration of the first cell, a number of SSBs of the first cell, an SSB set of the first cell, and a number of PDCCH monitoring occasions corresponding to one SSB of the first cell.

28. The method according to claim 26 or 27, wherein
in a case where the paging channel comprises a P-PDCCH, the configuration information related to the paging channel of the first cell is further used for determining a paging search space associated with the first cell on the second cell; and/or
in a case where the paging channel comprises a PEI-PDCCH, the configuration information related to the paging channel of the first cell is further used for determining at least one of the following information: a PEI search space associated with the first cell on the second cell, a number of POs configured for the first cell, and a number of subgroups comprised in one PO configured for the first cell.

29. The method according to any one of claims 26 to 28, wherein the first configuration information is further used for determining at least one of the following information: a search space #0 of the second cell, and an initial downlink BWP configuration of the second cell, wherein the search space #0 of the second cell and/or the initial downlink BWP configuration of the second cell is used for determining a paging search space and/or a PEI search space associated with the first cell on the second cell.

30. The method according to any one of claims 21 to 29, wherein a paging early indication occasion (PEI-O) of the second cell has an association relationship with a PO of the second cell.

31. The method according to claim 30, wherein the first configuration information is used for configuring the terminal device to monitor a PEI-PDCCH at the PEI-O of the second cell.

32. The method according to claim 30 or 31, wherein the first configuration information is used for configuring the terminal device to monitor a P-PDCCH at the PO of the second cell.

33. The method according to any one of claims 21 to 29, wherein a PEI-O of the second cell has an association relationship with a PO of the first cell.

34. The method according to claim 33, wherein the first configuration information is used for configuring the terminal device to monitor a PEI-PDCCH at the PEI-O of the second cell.

35. The method according to claim 33 or 34, wherein the first configuration information is used for configuring the terminal device to monitor a P-PDCCH at the PO of the first cell.

36. The method according to any one of claims 21 to 29, wherein a PEI-O of the first cell has an association relationship with a PO of the second cell.

37. The method according to claim 36, wherein the first configuration information is used for configuring the terminal device to monitor a PEI-PDCCH at the PEI-O of the first cell.

38. The method according to claim 36 or 37, wherein the first configuration information is used for configuring the terminal device to monitor a P-PDCCH at the PO of the second cell.

39. The method according to any one of claims 21 to 38, wherein the first configuration information comprises an identifier of the second cell.

40. The method according to any one of claims 21 to 39, wherein the first cell is a primary cell of the terminal device, and the second cell is a secondary cell of the terminal device.

41. A wireless communication method, performed by a terminal device and comprising:
receiving first configuration information sent by a network device of a first cell, wherein the first configuration information comprises configuration information related to a paging channel and first downlink bandwidth part (BWP) configuration information, and the first downlink BWP configuration information is used for determining a first downlink BWP; and
monitoring the paging channel on the first downlink BWP according to the first configuration information.

42. The method according to claim 41, wherein the configuration information related to the paging channel is configuration information related to a paging channel of the first cell;
monitoring the paging channel on the first downlink BWP according to the first configuration information comprises:
monitoring the paging channel on the first downlink BWP according to the configuration information related to the paging channel of the first cell.

43. The method according to claim 42, wherein the configuration information related to the paging channel of the first cell is used for determining at least one of the following information: a length of a paging discontinuous reception (DRX) cycle of the first cell, a cell discontinuous transmission (DTX) cycle configuration of the first cell, a cell DRX cycle configuration of the first cell, a number of synchronization signal blocks (SSBs) of the first cell, an SSB set of the first cell, and a number of physical downlink control channel (PDCCH) monitoring occasions corresponding to one SSB of the first cell.

44. The method according to claim 42 or 43, wherein
in a case where the paging channel comprises a paging-physical downlink control channel (P-PDCCH), the configuration information related to the paging channel of the first cell is further used for determining a paging search space on the first downlink BWP; and/or
in a case where the paging channel comprises a paging early indication-physical downlink control channel (PEI-PDCCH), the configuration information related to the paging channel of the first cell is further used for determining at least one of the following information: a PEI search space on the first downlink BWP, a number of POs configured for the first cell, and a number of subgroups comprised in one PO configured for the first cell.

45. The method according to any one of claims 41 to 44, wherein the first downlink BWP is a downlink BWP on the first cell.

46. The method according to claim 45, wherein a bandwidth of the first downlink BWP is smaller than a bandwidth of an initial downlink BWP on the first cell.

47. The method according to claim 45 or 46, wherein in a case where the bandwidth of the first downlink BWP is smaller than the bandwidth of the initial downlink BWP on the first cell, the first downlink BWP is a part of frequency domain resources in the initial downlink BWP on the first cell.

48. The method according to any one of claims 41 to 44, wherein the first downlink BWP is a downlink BWP on a second cell.

49. The method according to claim 48, wherein a bandwidth of the first downlink BWP is smaller than a bandwidth of an initial downlink BWP on the second cell.

50. The method according to claim 48 or 49, wherein in a case where the bandwidth of the first downlink BWP is smaller than the bandwidth of the initial downlink BWP on the second cell, the first downlink BWP is a part of frequency domain resources in the initial downlink BWP on the second cell.

51. A wireless communication method, performed by a network device of a first cell and comprising:
sending first configuration information to a terminal device, wherein the first configuration information comprises configuration information related to a paging channel and first downlink bandwidth part (BWP) configuration information, the first downlink BWP configuration information is used for determining a first downlink BWP, and the first configuration information is used for the terminal device to monitor the paging channel on the first downlink BWP.

52. The method according to claim 51, wherein the configuration information related to the paging channel is configuration information related to a paging channel of the first cell.

53. The method according to claim 52, wherein the configuration information related to the paging channel of the first cell is used for determining at least one of the following information: a length of a paging discontinuous reception (DRX) cycle of the first cell, a cell discontinuous transmission (DTX) cycle configuration of the first cell, a cell DRX cycle configuration of the first cell, a number of synchronization signal blocks (SSBs) of the first cell, an SSB set of the first cell, and a number of physical downlink control channel (PDCCH) monitoring occasions corresponding to one SSB of the first cell.

54. The method according to claim 52 or 53, wherein
in a case where the paging channel comprises a paging-physical downlink control channel (P-PDCCH), the configuration information related to the paging channel of the first cell is further used for determining a paging search space on the first downlink BWP; and/or
in a case where the paging channel comprises a paging early indication-physical downlink control channel (PEI-PDCCH), the configuration information related to the paging channel of the first cell is further used for determining at least one of the following information: a PEI search space on the first downlink BWP, a number of POs configured for the first cell, and a number of subgroups comprised in one PO configured for the first cell.

55. The method according to any one of claims 51 to 54, wherein the first downlink BWP is a downlink BWP on the first cell.

56. The method according to claim 55, wherein a bandwidth of the first downlink BWP is smaller than a bandwidth of an initial downlink BWP on the first cell.

57. The method according to claim 55 or 56, wherein in a case where the bandwidth of the first downlink BWP is smaller than the bandwidth of the initial downlink BWP on the first cell, the first downlink BWP is a part of frequency domain resources in the initial downlink BWP on the first cell.

58. The method according to any one of claims 51 to 54, wherein the first downlink BWP is a downlink BWP on a second cell.

59. The method according to claim 58, wherein a bandwidth of the first downlink BWP is smaller than a bandwidth of an initial downlink BWP on the second cell.

60. The method according to claim 58 or 59, wherein in a case where the bandwidth of the first downlink BWP is smaller than the bandwidth of the initial downlink BWP on the second cell, the first downlink BWP is a part of frequency domain resources in the initial downlink BWP on the second cell.

61. A wireless communication apparatus, wherein the apparatus comprises:
a receiving module, configured to receive first configuration information sent by a network device of a first cell, wherein the first configuration information comprises configuration information related to a paging channel; and
the receiving module is further configured to monitor the paging channel on a second cell according to the first configuration information.

62. A wireless communication apparatus, wherein the apparatus comprises:
a sending module, configured to send first configuration information to a terminal device, wherein the first configuration information comprises configuration information related to a paging channel, and the first configuration information is used for the terminal device to monitor the paging channel on a second cell.

63. A wireless communication apparatus, wherein the apparatus comprises:
a receiving module, configured to receive first configuration information sent by a network device of a first cell, wherein the first configuration information comprises configuration information related to a paging channel and first downlink BWP configuration information, and the first downlink BWP configuration information is used for determining a first downlink BWP; and
the receiving module is further configured to monitor the paging channel on the first downlink BWP according to the first configuration information.

64. A wireless communication apparatus, wherein the apparatus comprises:
a sending module, configured to send first configuration information to a terminal device, wherein the first configuration information comprises configuration information related to a paging channel and first downlink BWP configuration information, the first downlink BWP configuration information is used for determining a first downlink BWP, and the first configuration information is used for the terminal device to monitor the paging channel on the first downlink BWP.

65. A communication device, wherein the communication device comprises a processor and a memory, the memory stores a computer program, and the processor is configured to execute the computer program to implement the method according to any one of claims 1 to 20, or to implement the method according to any one of claims 21 to 40, or to implement the method according to any one of claims 41 to 50, or to implement the method according to any one of claims 51 to 60.

66. A computer-readable storage medium, wherein the storage medium stores a computer program, and the computer program is used for being executed by a processor to implement the method according to any one of claims 1 to 20, or to implement the method according to any one of claims 21 to 40, or to implement the method according to any one of claims 41 to 50, or to implement the method according to any one of claims 51 to 60.

67. A chip, wherein the chip comprises a programmable logic circuit and/or program instructions, and when the chip runs, it is used for implementing the method according to any one of claims 1 to 20, or implementing the method according to any one of claims 21 to 40, or implementing the method according to any one of claims 41 to 50, or implementing the method according to any one of claims 51 to 60.

68. A computer program product, wherein the computer program product comprises computer instructions, the computer instructions are stored in a computer-readable storage medium, and a processor reads and executes the computer instructions from the computer-readable storage medium to implement the method according to any one of claims 1 to 20, or to implement the method according to any one of claims 21 to 40, or to implement the method according to any one of claims 41 to 50, or to implement the method according to any one of claims 51 to 60.
